# EUROPÄISCHE PATENTSCHRIFT

(11) **EP 2 508 692 B1**
(45) Veröffentlichungstag und Bekanntmachung des Hinweises auf die Patenterteilung: **06.05.2020**
(21) Anmeldenummer: 12450018.2
(22) Anmeldetag: 03.04.2012
(51) Int. Cl.: E04F 15/10, E04B 1/80, E04F 15/18, E04F 15/02, B32B 5/32, B32B 7/02, B32B 5/18, B32B 21/04, B32B 27/30, B32B 27/40, E04C 2/24, B32B 7/05, B32B 21/02, B32B 27/06

(54) **Dämmplatte und Verfahren zum Herstellen einer Dämmplatte**
Insulation board and method for producing same
Panneau isolant et procédé de fabrication d'un panneau isolant

(30) Priorität: 04.04.2011 AT 18511 U
(43) Veröffentlichungstag der Anmeldung: 10.10.2012
(73) Patentinhaber: Tiefenthaler, Michael, 1190 Wien (AT)
(72) Erfinder: Tiefenthaler, Michael, 1190 Wien (AT)
(74) Vertreter: Beer & Partner Patentanwälte KG

(56) Entgegenhaltungen:
- EP-A2- 1 052 338
- WO-A1-00/43442
- WO-A1-2006/010342
- DE-A1- 3 405 231
- DE-U1- 7 712 226
- US-A- 3 616 029

## Beschreibung

Die Erfindung betrifft eine Dämmplatte, wie sie insbesondere zum Dämmen von Decken in Gebäuden ("Geschossdeckendämmplatte") verwendet werden kann und ein Verfahren zum Herstellen einer solchen Dämmplatte.

Derartige Dämmplatten werden verwendet, um Decken in nicht bewohnten Dachräumen zu isolieren, wozu Dämmplatten an der Oberseite einer obersten Geschossdecke, über der sich ein, insbesondere nicht bewohnter, Dachraum befindet, angebracht (verlegt) werden.

Bekannte Dämmplatten für Geschossdecken enthalten eine Dämmstoffplatte, die an ihrer Oberseite mit einer Deckschicht aus zumindest einer Platte, beispielsweise aus armierten Gipsfaserplatten, versehen ist. Auf diese Weise sind die Dämmplatten bei ihrer Verwendung als Geschossdeckendämmplatten begehbar, beispielsweise um Wartungsarbeiten im Dachraum durchführen zu können, und belastbar, um Gegenstände im (nicht bewohnten) Dachraum lagern zu können.

Die bekannten, an Geschossdeckendämmplatten vorgesehenen Platten, beispielsweise Gipsfaserplatten, die an Dämmstoffplatten, insbesondere aus einem dämmenden Werkstoff, wie expandiertem Polystyrol (EPS) angebracht werden, geben der Dämmplatte eine Begehbarkeit, Belastbarkeit bzw. einen Trittschutz, obwohl die Dämmstoffplatte selbst eine geringe Festigkeit aufweist. Die bekannten Dämmplatten werden durch gesonderte bzw. nachträgliche manuelle und/oder maschinelle Arbeitsvorgänge bzw. Herstellungsschritte durch kraftschlüssiges Verbinden der Deckschicht mit der Dämmstoffplatte hergestellt. Beispielsweise wird die Deckschicht mit der Dämmstoffplatte verklebt.

Nachteilig bei den bekannten Geschossdeckendämmplatten ist, dass gesonderte Bearbeitungsschritte erforderlich sind, was zu erhöhten Produktionskosten führt.

Ein weiterer Nachteil der bekannten Geschossdeckendämmplatten ist es, dass diese wegen der Gipsfaserplatten oder anderer Trittschutzplatten ein erhebliches Gewicht aufweisen, sodass das Verlegen der bekannten Geschossdeckendämmplatten erheblichen Kraftaufwand erfordert und zu einer physischen Belastung der die Platten verlegenden Person führt.

Eine gattungsgemäße Dämmplatte ist aus der DE 34 05 231 A1 bekannt.

Der Erfindung liegt die Aufgabe zugrunde, eine Dämmplatte, insbesondere eine Geschossdeckendämmplatte, und ein Verfahren zum Herstellen derselben zu schaffen, welche die erwähnten Nachteile nicht aufweist und insbesondere im Hinblick auf die angestrebten Reduzierungen von Heizenergiebedarf und CO2-Emissionen durch Dämmmaßnahmen, kostengünstiger angeboten werden kann. Zudem wird die Aufgabe gelöst, ein Auswölben der Dämmplatte zu unterbinden und eine Nut-Feder-Verbindung zum Verbinden von Dämmplatten zu ermöglichen.

Gelöst wird diese Aufgabe erfindungsgemäß mit einer Dämmplatte, welche die Merkmale von Anspruch 1 aufweist.

Insoweit das Verfahren betroffen ist, wird die Aufgabe mit einem Verfahren gemäß dem unabhängigen Verfahrensanspruch gelöst.

Bevorzugte und vorteilhafte Ausgestaltungen der Erfindung sind Gegenstand der Unteransprüche.

Erfindungsgemäß ist vorgesehen, dass die Dämmstoffplatte und die Deckschicht aus expandiertem und z.B. mittels Heißdampf verschweißtem Polystyrol bestehen, wobei das expandierte Polystyrol der Dämmstoffplatte im Vergleich zu jenem der Deckschicht unterschiedlich, z.B. stärker bzw. intensiver oder geringer, verschweißt ist, dass zumindest die Dämmstoffplatte wenigstens teilweise aus expandiertem Polystyrol mit einem Zusatz aus athermanen Stoffen besteht, dass die Dämmstoffplatte aus expandiertem Polystyrol eine Dichte von 5 - 50 kg/m³ bzw. g/l aufweist, und dass die Außenränder der Dämmplatte an ihren Seitenflächen oder wenigstens an einzelnen Seitenflächen mit einer Nut-Feder-Verbindung als Mittel zum Verbinden von Dämmplatten ausgeführt sind.

In einer Ausführungsform kann sich die erfindungsgemäße Dämmplatte dadurch auszeichnen, dass die Deckschicht im Vergleich zur Dämmstoffplatte eine höhere Dichte und/oder Festigkeit und/oder Belastbarkeit aufweist.

In einer Ausführungsform kann sich die erfindungsgemäße Dämmplatte dadurch auszeichnen, dass die wenigstens eine Deckschicht eine andere Klasse zum Brandverhalten als die Dämmstoffplatte aufweist.

In einer Ausführungsform kann die erfindungsgemäße Dämmplatte, insbesondere Geschossdeckendämmplatte, wenigstens eine Schicht als Trittschallschutz aufweisen, woraus sich beispielsweise folgende Ausführungsformen der Schichtfolgen ergeben können:
Trittschallschutz-Dämmstoffplatte-Deckschicht oder
Dämmstoffplatte-Trittschallschutz-Deckschicht.

In einer Ausführungsform kann sich die erfindungsgemäße Dämmplatte dadurch auszeichnen, dass die Deckschicht aus expandiertem Polystyrol eine Dichte von 6 - 600 kg/m³ bzw. g/l, bevorzugt etwa 10 - 400 kg/m³ bzw. g/l, insbesondere 15 - 250 kg/m³ bzw. g/l, besonders bevorzugt etwa 20 - 170 kg/m³ bzw. g/l aufweist.

In einer Ausführungsform kann sich die erfindungsgemäße Dämmplatte dadurch auszeichnen, dass die Deckschicht wenigstens einmal unterbrochen ist.

In einer Ausführungsform kann sich die erfindungsgemäße Dämmplatte dadurch auszeichnen, dass die Unterbrechung, insbesondere der Schlitz, die Deckschicht nur teilweise durchsetzt.

In einer Ausführungsform kann sich die erfindungsgemäße Dämmplatte dadurch auszeichnen, dass die Deckschicht wenigstens eine Unterbrechung aufweist, welche die Deckschicht zumindest teilweise durchsetzt.

In einer Ausführungsform kann sich die erfindungsgemäße Dämmplatte dadurch auszeichnen, dass die Dämmstoffplatte wenigstens eine Unterbrechung aufweist, welche die Dämmstoffplatte zumindest teilweise durchsetzt.

In einer Ausführungsform kann sich die erfindungsgemäße Dämmplatte dadurch auszeichnen, dass die Dämmstoffplatte von der Deckschicht nur teilweise abgedeckt ist.

In einer Ausführungsform kann sich die erfindungsgemäße Dämmplatte dadurch auszeichnen, dass die Dämmstoffplatte auf einer oder beiden ihrer Großflächen zumindest zwei Deckschichten aufweist, die nebeneinander angeordnet sind.

In einer Ausführungsform kann sich die erfindungsgemäße Dämmplatte dadurch auszeichnen, dass die wenigstens eine Deckschicht wenigstens eine zumindest teilweise Unterbrechung, insbesondere einen Schlitz, aufweist.

In einer Ausführungsform kann sich die erfindungsgemäße Dämmplatte dadurch auszeichnen, dass die Unterbrechung, insbesondere der Schlitz, bis in die Dämmstoffplatte reicht.

In einer Ausführungsform kann sich die erfindungsgemäße Dämmplatte dadurch auszeichnen, dass die Deckschicht mit der Dämmstoffplatte nur bereichsweise verbunden ist.

In einer Ausführungsform kann sich die erfindungsgemäße Dämmplatte dadurch auszeichnen, dass in ihr wenigstens ein Stützelement vorgesehen ist.

In einer Ausführungsform kann sich die erfindungsgemäße Dämmplatte dadurch auszeichnen, dass das Stützelement, das mit der Deckschicht einstückig ausgebildet ist, vorgesehen ist.

In einer Ausführungsform kann sich die erfindungsgemäße Dämmplatte dadurch auszeichnen, dass das Stützelement in die Dämmstoffplatte ragt.

In einer Ausführungsform kann sich die erfindungsgemäße Dämmplatte dadurch auszeichnen, dass das Stützelement die Dämmstoffplatte durchgreift.

In einer Ausführungsform kann sich die erfindungsgemäße Dämmplatte dadurch auszeichnen, dass wenigstens ein mehrteiliges Stützelement vorgesehen ist.

In einer Ausführungsform kann sich die erfindungsgemäße Dämmplatte dadurch auszeichnen, dass die Stützelemente einen mit der Deckschicht, insbesondere einstückig, verbundenen Teil und einen weiteren Teil, der insbesondere Teil der Dämmstoffplatte ist, aufweisen.

In einer Ausführungsform kann sich die erfindungsgemäße Dämmplatte dadurch auszeichnen, dass die Deckschicht wenigstens auf einer ihrer Flächen profiliert ist.

In einer Ausführungsform kann sich die erfindungsgemäße Dämmplatte dadurch auszeichnen, dass die Deckschicht mit Rändern in wenigstens eine Seitenfläche der Dämmstoffplatte übergreift.

Im Rahmen der Erfindung ist vorgesehen, dass die dämmende Materialkomponente ("Dämmstoffplatte") und/oder Deckschicht im Produktionsverlauf in wenigstens einem Formhohlraum gebildet und miteinander verbunden werden.

Sowohl die Deckschicht als auch die Dämmstoffplatte können beim Herstellen der erfindungsgemäßen Dämmplatte als fertige Einlegeteile, die beim Herstellungsverfahren im Wesentlichen nicht verändert werden, eingesetzt werden. In diesem Fall wird der jeweils andere Teil der Dämmplatte (Deckschicht von Dämmstoffplatte) mit dem die Dämmstoffplatte oder die Deckschicht bildenden Teil unmittelbar verbunden.

Das erfindungsgemäße Verfahren ist dadurch gekennzeichnet, dass als Werkstoff für die Dämmstoffplatte und die Deckschicht expandiertes Polystyrol verwendet wird, wobei das expandierte Polystyrol der Dämmstoffplatte und das expandierte Polystyrol der Deckschicht z.B. mittels Heißdampf verschweißt wird und wobei das expandierte Polystyrol der Dämmstoffplatte im Vergleich zu jenem der Deckschicht unterschiedlich, z.B. stärker bzw. intensiver oder geringer, verschweißt wird, dass als Werkstoff zumindest für die Dämmstoffplatte wenigstens teilweise expandiertes Polystyrol mit einem Zusatz aus athermanen Stoffen verwendet wird, dass als Werkstoff für die Dämmstoffplatte expandiertes Polystyrol mit einer Dichte von 5 - 50 kg/m³ bzw. g/l verwendet wird, und dass die Außenränder der Dämmplatte an ihren Seitenflächen oder wenigstens an einzelnen Seitenflächen mit einer Nut-Feder-Verbindung als Mittel zum Verbinden von Dämmplatten ausgeführt werden.

In einer Ausführungsform kann sich das erfindungsgemäße Verfahren dadurch auszeichnen, dass als Deckschicht wenigstens ein vorgefertigter Einlegeteil verwendet wird.

In einer Ausführungsform kann sich das erfindungsgemäße Verfahren dadurch auszeichnen, dass als Dämmstoffplatte wenigstens ein vorgefertigter Einlegeteil verwendet wird, mit dem die Deckschicht unmittelbar, z.B. durch Ausschäumen, verbunden wird.

In einer Ausführungsform kann sich das erfindungsgemäße Verfahren dadurch auszeichnen, dass die Deckschicht bzw. der Einlegeteil mit der Dämmstoffplatte kraftschlüssig und/oder formschlüssig verbunden wird.

In einer Ausführungsform kann sich das erfindungsgemäße Verfahren dadurch auszeichnen, dass die Dämmstoffplatte als Einlegeteil mit der Deckschicht kraftschlüssig und/oder formschlüssig verbunden wird.

In einer Ausführungsform kann sich das erfindungsgemäße Verfahren dadurch auszeichnen, dass die Dämmplatte als Ganzes aus einem für Deckschicht und/oder Dämmstoffplatte formgebenden Hohlraum entformt wird.

In einer Ausführungsform kann sich das erfindungsgemäße Verfahren dadurch auszeichnen, dass als Deckschicht und/oder Einlegeteil ein Werkstoff mit einer höheren Materialdichte und/oder Materialfestigkeit als der Werkstoff der Dämmstoffplatte verwendet wird.

In einer Ausführungsform kann sich das erfindungsgemäße Verfahren dadurch auszeichnen, dass das Verfahren ein Verfahren, ausgewählt aus der Gruppe umfassend ein- oder mehrstufiges Formteilproduktionsverfahren, ein- oder mehrstufiges Blockproduktionsverfahren, Mehrkomponentenproduktionsverfahren, Dual Density-, Transfer- und Doppel-Rotax-Verfahren ist.

Von Vorteil bei der erfindungsgemäßen Dämmplatte ist es, dass die wenigstens eine Deckschicht, welche die Trittfestigkeit und Belastbarkeit ergibt, mit der Dämmstoffplatte (= dämmende Materialkomponente) unmittelbar, d.h. ohne Hilfsmittel, insbesondere ohne klebende Hilfsmittel ("Klebstoffe"), verbunden ist, so dass die erfindungsgemäße Dämmplatte eine Einheit aus Dämmstoffplatte und Deckschicht darstellt.

Bei der erfindungsgemäßen Dämmplatte, insbesondere Geschossdeckendämmplatte, wird die Belastbarkeit und/oder Trittfestigkeit durch wenigstens eine an der dämmenden Materialkomponente (Dämmstoffplatte) angebrachte, belastbare (z.B. trittfeste) Deckschicht erreicht, die ohne gesonderte und/oder nachträgliche Arbeitsschritte außerhalb eines für Dämmstoffplatte und/oder Deckschicht formgebenden Hohlraumes, wie Verbinden der beiden Komponenten mittels eines Klebers oder Ähnlichem, erhalten wird und als Ganzes entformt werden kann.

Insbesondere wird die erfindungsgemäße Aufgabe dadurch gelöst, dass die erfindungsgemäße Dämmplatte, insbesondere Geschossdeckendämmplatte, aus dämmenden Werkstoffen, beispielsweise aus expandiertem Polystyrol (EPS), in wenigstens zwei unterschiedlichen Dichten und/oder Werkstoffen und/oder Festigkeiten besteht.

Die erfindungsgemäße Dämmplatte mit ihren Schichten mit unterschiedlichen Eigenschaften kann in einem ein- oder mehrstufigen Formteilproduktionsprozess, einem ein- oder mehrstufigen Blockproduktionsprozess oder einem sonstigen Mehrkomponentenproduktionsverfahren hergestellt werden, wobei ohne nachträgliche Herstellungsschritte eine integrale, d.h. aus Dämmstoffplatte und (wenigstens einer) Deckschicht bestehende, Dämmplatte erhalten wird.

Im Zuge des Herstellungsverfahrens der Dämmplatte, insbesondere Geschossdeckendämmplatte wird eine form- und/oder kraftschlüssige Verbindung zwischen der wenigstens einen dämmenden Materialkomponente (Dämmstoffplatte) und der wenigstens einen Deckschicht mit höherer Belastbarkeit und/oder Festigkeit hergestellt, indem Deckschicht und Dämmstoffplatte miteinander unmittelbar verbunden sind.

In einer Ausführungsform der Erfindung ist vorgesehen, dass die wenigstens eine Deckschicht (insbesondere als Trittschutz) von zumindest einem Einlegeteil mit höherer Festigkeit gebildet wird, der aus dem gleichen oder einem anderen Werkstoff als die dämmende Materialkomponente (Dämmstoffplatte) besteht. Der wenigstens eine Einlegeteil, der die Deckschicht bildet, kann im Rahmen der Erfindung im Zuge eines ein- oder mehrstufigen Formteilproduktionsprozesses, eines ein- oder mehrstufigen Blockproduktionsprozesses oder eines anderen Mehrkomponentenproduktionsverfahrens mit der wenigstens einen dämmenden Materialkomponente (Dämmstoffplatte) form- und/oder kraftschlüssig verbunden werden, so dass sich eine integrale Dämmplatte, insbesondere Geschossdeckendämmplatte, ergibt.

Beispiele für Werkstoffe der Deckschicht (Trittschutz) sind (körnige) Partikelschaumstoffe, expandiertes Polystyrol (EPS), expandiertes Polypropylen (EPP), expandiertes Polyethylen (EPE), thermoplastische Kunststoffteilchen, Holzverbundwerkstoffe, Gipsfaserplatten, Kunststoffmischungen, extrudiertes Polystyrol, Polyurethan, Kunststoff-Hartschaum, und dgl. mit höherer Dichte und/oder Festigkeit und/oder Belastbarkeit als die Dämmstoffplatte.

Dank der Erfindung kann das Herstellungsverfahren erheblich rationalisiert werden, weil ein gesondertes Herstellen der Dämmstoffplatte und ein nachträgliches Anbringen von wenigstens einer Deckschicht durch Verkleben im Zuge gesonderter Herstellungsschritte außerhalb eines für Deckschicht und/oder Dämmschicht formgebenden Hohlraumes entfällt. Vielmehr wird erfindungsgemäß eine kraftschlüssige und/oder formschlüssige ("unmittelbare") Verbindung zwischen wenigstens einer Deckschicht (Trittschutz) und dämmender Materialkomponente (Dämmstoffplatte) in einem ein- oder mehrstufigen Herstellungsverfahren herbeigeführt. Solche Herstellungsverfahren sind z.B. Dual Density-, Transfer-, Doppel-Rotax-Verfahren, ein- oder mehrstufige Blockproduktionsprozesse oder ein sonstiges Mehrkomponentenproduktionsverfahren.

Der Formteilproduktionsprozess oder Blockproduktionsprozess kann auch derart gestaltet sein, dass in einem Formhohlraum mehrere Dämmplatten, insbesondere Geschossdeckendämmplatten, in einem einzigen Produktionszyklus hergestellt werden.

Das Herstellen von Dämmplatten, insbesondere Geschossdeckendämmplatten, aus zwei oder mehreren Materialkomponenten, nämlich Dämmstoffplatte und Deckschicht/en (Trittschutz), kann auch mittels eines ein- oder mehrstufigen Blockproduktionsprozesses integral erfolgen.

Im Rahmen der Erfindung besteht die Möglichkeit, großflächige Geschossdeckendämmplatten zu zerteilen, indem diese beispielsweise durch erhitzte Schneiddrähte und/oder mechanische Bearbeitung auf das erforderliche Endmaß geteilt (konfektioniert) werden.

Das Herstellen der erfindungsgemäßen Dämmplatten, insbesondere Geschossdeckendämmplatten, kann auch so ausgeführt werden, dass wenigstens eine vorgefertigte Deckschicht (z.B. Einlegeteil als Trittschutz) aus beliebigem Werkstoff kraftschlüssig und/oder formschlüssig in einem ein- oder mehrstufigen Formteilproduktionsprozess oder einem ein- oder mehrstufigen Blockproduktionsprozess oder einem sonstigen Mehrkomponentenproduktionsverfahren mit der dämmenden Materialkomponente (Dämmstoffplatte) integral verbunden wird. Alternativ oder zusätzlich kann die Dämmstoffplatte ein zumindest teilweise vorgefertigter Einlegeteil sein.

Dank des erfindungsgemäßen Aufbaus der Dämmplatte und der auf ihr vorgesehenen Deckschicht (Trittschutz), die beispielsweise aus expandiertem Polystyrol oder einem Partikelschaumstoff hoher Dichte und/oder Festigkeit besteht, ergibt sich ein geringes Gewicht der Dämmplatte, sodass deren Verarbeiten und Verlegen vereinfacht und mit weniger Kraftaufwand möglich ist.

Die Außenränder der erfindungsgemäßen Dämmplatte, insbesondere Geschossdeckendämmplatte, sind an ihren Seitenflächen, oder wenigstens einzelnen derselben, mit einer, insbesondere rundumlaufenden, klemmenden oder einfach formschlüssigen Nut- und Feder-Verbindung ausgeführt. In die Mittel zum Verbinden von Dämmplatten können die Dämmstoffplatte und/oder die wenigstens eine Deckschicht einbezogen sein.
In einer Ausführungsform kann erfindungsgemäß vorgesehen sein, dass die Oberflächen der dämmenden Komponente (Dämmstoffplatte) und/oder insbesondere der Deckschicht (Trittschutz) profiliert sind, um eine Rutschsicherheit zu ergeben.

Es ist ebenfalls in Betracht gezogen, die dämmende Materialkomponente (Dämmstoffplatte) beidseitig mit wenigstens einer Deckschicht zu versehen, was beispielsweise mit einem der oben beschriebenen Herstellungsverfahren ausgeführt werden kann.

Unterschiede im Verhalten der Werkstoffe von Dämmstoffplatte und Deckschicht, die zu einer Verformung der Dämmplatte, insbesondere einer Schüsselbildung, führen können, werden in einer Ausführungsform vermieden, indem die wenigstens eine Deckschicht wenigstens einmal durch eine Unterbrechung unterteilt wird. Diese Unterbrechung kann durch Schlitz, Einschnitt oder Unterteilung der Deckschicht erreicht werden. Dabei kann die Unterbrechung der Deckschicht bis in die Dämmstoffplatte und/oder wenigstens eine weitere Deckschicht reichen.

Die wenigstens eine Unterbrechung, z.B. Schlitz, Einschnitt, Entlastungsschlitz, kann die wenigstens eine Deckschicht nur teilweise durchsetzen und diese nicht gänzlich durchdringen. Der wenigstens eine Einschnitt durchsetzt die wenigstens eine Deckschicht nur teilweise. Es kann sich wenigstens eine Sollbruchstelle im Bereich der Deckschicht und/oder Dämmstoffplatte bilden. Die Unterbrechung, z.B. Schlitz, Einschnitt, etc. kann vom Randbereich beabstandet sein. Alternativ oder zusätzlich kann die Dämmstoffplatte mit wenigstens einer Unterbrechung, z.B. Einschnitt, Schlitz, Entlastungsschlitz, versehen sein, welche die Dämmstoffplatte teilweise oder gänzlich durchsetzen kann und beliebig in wenigstens eine Deckschicht reichen kann.

Diese wenigstens eine als Entlastung wirkende Unterbrechung, z.B. Schlitz, Einschnitt, Unterteilung, etc. kann auch nachträglich durch beispielsweise mechanisches Bearbeiten, erhitzte Schneiddrähte, Heißprägemaschine, erhitzte Stege, etc. gebildet werden.

Die Unterbrechung, z.B. der Schlitz, kann im Querschnitt z.B. keilförmig, sich verjüngend (also mit zueinander unter einem Winkel stehenden Seitenwänden), sich nicht verjüngend (also mit zueinander parallelen Seitenwänden), gerade oder konisch sein.

Als Beispiele für die Lage von als eine Entlastung bewirkenden Unterbrechung in einer Dämmplatte sind zu nennen:
Wenigstens eine Oberfläche, wenigstens eine Seitenfläche, wenigstens eine Außenfläche, die der Deckschicht, die der Dämmstoffplatte zugewandte Fläche, wenigstens ein Kantenbereich, wenigstens ein Eckbereich, die der obersten Geschoßdecke zugewandte und/oder abgewandte Oberfläche, das Innere der Dämmplatte, wenigstens ein Randbereich der Deckschicht und/oder Dämmstoffplatte, wenigstens ein Stützelement, wenigstens eine zwischen Deckschicht und Dämmstoffplatte gegebenenfalls angeordnete Materialkomponente und beliebige Kombinationen derselben.

Zusätzlich oder alternativ kann eine Unterbrechung im Bereich zwischen der wenigstens einen Deckschicht und der Dämmstoffplatte und/oder im Übergangsbereich vorteilhaft sein. Eine etwaige Verbindung kann dadurch zumindest bereichsweise nach dem Herstellen der Dämmplatte wieder aufgehoben werden.

Wenigstens eine als Entlastungsschlitz wirkende Unterbrechung kann zusätzlich oder alternativ um die Deckschicht und/oder die Dämmstoffplatte rundumlaufend vorgesehen sein.

Die wenigstens eine Unterbrechung, z.B. der Entlastungsschlitz, kann beispielsweise horizontal, vertikal, zur Fläche der Dämmplatte geneigt (schräg gestellt) ausgerichtet sein.

Mehrere Unterbrechungen können zueinander versetzt angeordnet sein.

Mehrere Unterbrechungen, Schlitze, Einschnitte, Entlastungsschlitze, etc. können einander kreuzen bzw. überschneiden.

Wenn mehrere Unterbrechungen der Deckschicht vorgesehen sind, können diese an die Dämmplatte (insbesondere gleichmäßig) verteilt vorgesehen sein. In Betracht gezogen ist aber auch, Unterbrechungen der Deckschicht insbesondere am Rand der Dämmplatte vorzusehen oder dort näher aneinander vorzusehen.

Die wenigstens eine Deckschicht und die Dämmstoffplatte können unterschiedliche Abmessungen haben und können beliebig (z.B. zumindest teilweise identisch und/oder unterschiedlich) ausgestaltet sein. Die Deckschicht kann zur Dämmstoffplatte versetzt angeordnet sein und kann zumindest teilweise, über die Dämmstoffplatte überstehen.

In einer besonders vorteilhaften Ausführung der Erfindung besteht zumindest die Dämmstoffplatte wenigstens teilweise aus expandiertem Polystyrol mit einem Zusatz aus athermanen Stoffen - insbesondere Infrarotabsorber bzw. -reflektoren.

Wahlweise können auf beiden Großflächen der Dämmstoffplatte vorgesehen Deckschichten gleicher oder anderer Stärke und/oder Dichte bzw. Festigkeit sein. Ferner können die Deckschichten gleich oder unterschiedlich ausgeformt und/oder angeordnet sein. Besonders vorteilhaft kann ein beidseitiges Versehen mit wenigstens einer Deckschicht sein, um ein Aufwölben der Geschossdeckendämmplatte zu verhindern.

In einer weiteren Ausführungsform weist die erfindungsgemäße Dämmplatte, insbesondere Geschossdeckendämmplatte, in wenigsten einem Seitenbereich Materialkomponenten höherer Dichte und/oder Festigkeit auf. Diese Materialkomponenten können mit der wenigstens einen Deckschicht und/oder Dämmstoffplatte kraft- und/oder formschlüssig verbunden sein. In einer besonders vorteilhaften Ausführung können diese Bestandteile der Deckschicht und/oder der Dämmstoffplatte sein. Es kann sich dabei ebenfalls um einen Teil der wenigstens einen Deckschicht handeln. Infolge der erhöhten Stabilität im Randbereich der Dämmplatte kann ein Aufwölben (Schüsselbildung) der Dämmplatte (Geschossdeckendämmplatte) unterbunden werden. Die Materialkomponenten höherer Dichte und/oder Festigkeit können im Seitenbereich der Dämmplatte rundumlaufend vorgesehen sein. Die Deckschicht kann auch an allen Oberflächen (Außenflächen) der erfindungsgemäßen Dämmplatte (Geschoßdeckendämmplatte) vorhanden sein.

In einer weiteren beispielhaften Ausführungsform der erfindungsgemäßen Dämmplatte, insbesondere Geschossdeckendämmplatte, befindet sich zwischen der wenigstens einen Deckschicht und der Dämmstoffplatte zumindest teilweise eine weitere Schicht, insbesondere eine Schicht aus dämmendem, vorzugsweise elastischem Material. Aufgrund dieser Schicht können unterschiedliche Verhalten von Dämmstoffplatte und/oder Deckschicht hinsichtlich Dimensionsänderungen wie z.B. Kontraktion, Schwindung, Nachschwindung, Schrumpfung, Maßänderungen durch Wärmeeinfluss, etc. ausgeglichen werden. Ein Aufwölben (Schüsselbildung) der Dämmplatte (Geschossdeckendämmplatte) kann so unterbunden werden. Deckschicht und/oder Dämmstoffplatte werden mit der weiteren zwischen ihnen vorgesehenen Schicht vorzugsweise im Zuge eines ein- oder mehrstufigen Formteilproduktionsprozesses oder ein- oder mehrstufigen Blockproduktionsprozesses oder sonstigem Mehrkomponentenproduktionsverfahren kraft- und/oder formschlüssig verbunden.

In einer weiteren Ausführungsform der erfindungsgemäßen Dämmplatte, insbesondere Geschossdeckendämmplatte, kann ein Aufwölben unterbunden werden, indem die Dämmstoffplatte, insbesondere im Bereich der, der obersten Geschoßdecke zugewandten und/oder abgewandten, Oberfläche beliebige Materialkomponenten (insbesondere in Form von Schichten), vorzugsweise dämmenden Materialkomponenten, höherer Dichte und/oder Festigkeit, aufweist. Diese können beliebig ausgeformt, angeordnet, beabstandet sein. Beispielsweise können die Materialkomponenten höherer Dichte in Form von einer Art von Leisten angeordnet sein, welche beabstandet, bspw. parallel, schräg, diagonal zu einer der Kanten verlaufen, beliebig unterbrochen sein. Die Materialkomponente höherer Dichte kann auch die Form einer Leiste haben. Mehrere Leisten können sich überkreuzen. Die wenigstens eine Leiste kann in einem Querschnitt eine beliebige Form, insbesondere rechteckig, quadratisch, rund, zylindrisch, dreieckig, etc. aufweisen. Dadurch wird die Festigkeit bzw. Stabilität der Dämmstoffplatte erhöht und ein Aufwölben der Geschossdeckendämmplatte unterbunden.

Die ebene Form der erfindungsgemäßen Dämmplatte (Geschossdeckendämmplatte) kann auch dadurch gewährleistet werden, indem das Verhältnis der Dicke von Dämmstoffplatte zur wenigstens einen Deckschicht ein Aufwölben der erfindungsgemäßen Geschoßdeckendämmplatte unterbindet. Dies kann u.a. dadurch erzielt werden, dass die Dämmstoffplatte zumindest teilweise bzw. partiell größerer Dicke als die wenigstens eine Deckschicht aufweist. Im Wesentlichen kann die Dicke der Dämmstoffplatte zumindest partiell 50-99,9%, bevorzugt 60%-99,9%, besonders bevorzugt 75%-99,9% der Gesamtdicke der Dämmplatte, insbesondere Geschoßdeckendämmplatte, ausmachen. Durch die größere Dicke der Dämmstoffplatte, und damit verbundenen höheren Stabilität, Festigkeit, bspw. Biegefestigkeit, kann diese einem Aufwölben der Dämmplatte (Geschoßdeckendämmplatte) stärker entgegenwirken bzw. standhalten und ein solches unterbunden werden. Zusätzlich oder alternativ kann die Deckschicht zumindest partiell die gleiche oder eine größere Dicke als die Dämmstoffplatte aufweisen und ein Aufwölben unterbunden werden.

Die wenigstens eine Deckschicht kann, muss nicht gleich ausgeformt sein wie die dämmende Materialkomponente. Über die Ausformung von Deckschicht und/oder Dämmstoffplatte kann ein Aufwölben unterbunden werden. Dies kann beispielsweise dadurch erreicht werden, indem Dämmstoffplatte und/oder Deckschicht, z.B. im Bereich wenigstens einer Fläche, Oberfläche oder Seite, eine hierfür erforderliche Struktur, Profilierung, Muster oder dgl. aufweist. Aufgrund dessen wird die Dämmstoffplatte und/oder Deckschicht und/oder die Dämmplatte (Geschoßdeckendämmplatte) ausgesteift und ein Aufwölben unterbunden.

Bei der erfindungsgemäßen Geschoßdeckendämmplatte, ist das expandierte Polystyrol der Dämmstoffplatte im Vergleich zu jenem der Deckschicht unterschiedlich z.B. stärker bzw. intensiver verschweißt. Festgestellt kann dies bspw. über den Wasserdampfdiffusionswiderstandsfaktor (µ) werden, welcher in der Regel mit stärkerer Verschweißung ansteigen kann. Der Wasserdampfdiffusionswiderstandsfaktor wird in bekannter Weise durch standardisierte Prüfverfahren (z.B. ÖNORM EN 12086) ermittelt. Der Verschweißungsgrad kann auch in bekannter Weise über ein Messgerät ermittelt werden. Hierfür kann z.B. ein Staudruckmessgerät verwendet werden. Der Verschweißungsgrad von EPS-Schäumteilen kann z.B. mit einem von Fa. Erlenbach GmbH vertriebenen Messgerät (z.B. Verschweißungsmessgerät Typ EM 1840/PE) ermittelt werden. Infolge der höheren Verschweißung bzw. des höheren Verschweißungsgrades weist die Dämmstoffplatte eine erhöhte Stabilität auf, womit ein Aufwölben der erfindungsgemäßen Dämmplatte (Geschoßdeckendämmplatte) unterbunden werden kann. Es kann aber auch von Vorteil sein, wenn die Dämmstoffplatte eine geringere oder gleiche Verschweißung im Vergleich zur Deckschicht aufweist und dadurch ein Aufwölben der Dämmplatte verhindert wird.

In einer besonders vorteilhaften Ausführung der erfindungsgemäßen Dämmplatte, insbesondere Geschossdeckendämmplatte, kann diese wenigstens einen stützenden Teil aufweisen, um zumindest bereichsweise eine hohe Belastbarkeit zu erreichen. Dies kann beispielsweise durch die wenigstens eine Deckschicht erzielt werden, indem diese zumindest bereichsweise unterschiedliche Dicken aufweist. Durch eine zumindest bereichsweise größere Dicke der Deckschicht, höherer Härte und/oder Festigkeit im Vergleich zur Dämmstoffplatte, erhöht sich die Belastbarkeit wenigstens in diesem Bereich. Der wenigstens eine dickere Teil (Stützelement) kann beliebig tief - z.B. geringfügig, durchgehend, etc. in bzw. durch die Dämmstoffplatte reichen. Dieser Teil (Stützelement) kann durch die gesamte Dämmstoffplatte reichen und wahlweise mit wenigstens einer weiteren Deckschicht verbunden sein bzw. bis in oder durch diese reichen. Dieser eine vorzugsweise stützende Funktion übernehmende Teil, kann zusätzlich oder alternativ Bestandteil der Dämmstoffplatte sein und wahlweise beliebig in bzw. durch wenigstens eine Deckschicht reichen. Der wenigstens eine Teil (Stützelement) kann von gleicher oder höherer Dichte und/oder Festigkeit und/oder Belastbarkeit als die wenigstens eine Deckschicht und/oder Dämmstoffplatte sein. Der Teil kann beliebig ausgeformt, angeordnet, groß, aus beliebigem Werkstoff (wie z.B. Hartschaum-Kunststoff, Kunstschaum, expandiertes und/oder extrudiertes Polystyrol, Holz, Holzverbundwerkstoffe, Kunststoff, Metall, Kunststoffmischungen, Polyurethan, etc.) und kann von etwaigen weiteren Stützelementen beliebig beabstandet sein. Der als Stützelement wirkende Teil kann von beliebiger Form sein, wie z.B. Kegel, Zylinder, Keil, Rechteck, Quadrat, Pyramide, im Querschnitt zur Vertikalen bspw. A-, V-, U-, L-, X-, Y-, Z-, stern-, wellenförmig, verjüngend, etc. Der wenigstens eine als Stützelement dienende Teil kann sich aus mehreren Bestandteilen zusammensetzen oder ein Stück sein. Stellen höherer Belastbarkeit und/oder Festigkeit können z.B. im Bereich der Oberfläche der Deckschicht, z.B. mittels Markierung, farblichen Kontrasts, Hinweises (z.B. Zeichen, Symbol), Prägemarkierung, etc. gekennzeichnet sein. Die Belastbarkeit der Geschossdeckendämmung kann so wesentlich gesteigert und bspw. Kästen o.ä. abgestellt werden. Schäden an einer insbesondere dünneren Deckschicht werden so zuverlässig vermieden.

Der als Stützelement dienende Teil kann auch wenigstens ein zumindest teilweise vorgefertigter Einlegeteil sein, der mit wenigstens einer Deckschicht und/oder Dämmstoffplatte im Zuge eines ein- oder mehrstufigen Formteilproduktionsprozesses oder ein-oder mehrstufigen Blockproduktionsprozesses oder sonstigem Mehrkomponentenproduktionsverfahren kraft- und/oder formschlüssig verbunden wird.

Die soeben angeführten Ausführungsformen der erfindungsgemäßen Dämmplatte, insbesondere Geschossdeckendämmplatte, können ebenfalls zur Vermeidung eines Aufwölbens eingesetzt werden.

In einer weiteren Ausführungsform der erfindungsgemäßen Dämmplatte, insbesondere Geschossdeckendämmplatte, kann die Deckschicht aufgrund wenigstens einer beliebigen Profilierung, Strukturierung, Muster, Sicke, etc. zumindest partiell eine unterschiedliche Dicke aufweisen. Beispielsweise kann eine solche Formgebung der Deckschicht im Bereich wenigstens einer Außenfläche und/oder im Bereich der, der Dämmstoffplatte zugwandten Fläche vorgesehen sein. Diese kann u.a. über die wenigstens eine Unterbrechung, z.B. Ausnehmung, Entlastungsschlitz, etc., hergestellt werden. Über die zumindest partielle Strukturierung, Profilierung, Muster, Sicke, etc. kann die Belastbarkeit der Deckschicht bzw. Geschossdeckendämmplatte zumindest partiell erhöht werden. Dies kann beispielsweise über eine trapezförmige bzw. -ähnliche Profilierung erzielt werden. Die z.B. wenigstens eine Ausnehmung kann für diesen Zweck beliebiger Form, Anordnung, Ausgestaltung, Beabstandung, Tiefe, Größe, Breite, etc. sein. Die soeben angeführten Ausführungsformen der erfindungsgemäßen Dämmplatte, insbesondere Geschossdeckendämmplatte, können ebenfalls zur Vermeidung eines Aufwölbens eingesetzt werden.

Die wenigstens eine Deckschicht kann ebenfalls aus unterschiedlichen Werkstoffen bestehen, welche beliebig, insbesondere an unterschiedlichen Stellen, angeordnet sein können. In einer möglichen Ausführungsform kann die Deckschicht partiell z.B. expandiertes Polystyrol hoher Dichte und/oder Festigkeit aufweisen und an wenigstens einer anderen Stelle bspw. Holz, Holzverbundwerkstoffe, Kunststoff etc. Wahlweise kann die wenigstens eine, sich aus unterschiedlichen Komponenten zusammensetzende, Deckschicht wenigstens ein zumindest teilweise vorgefertigtes Einlegeteil sein. Die Deckschicht kann unterschiedliche Dicken aufweisen. Eine einheitliche Stärke der Deckschicht ist ebenfalls möglich. In einer besonders vorteilhaften Ausführung können die unterschiedlichen Materialkomponenten unterschiedlich hoch belastbar, insbesondere punktbelastbar, gemacht werden. Die wenigstens eine Deckschicht kann an unterschiedlichen Stellen eine unterschiedlich hohe Belastbarkeit bzw. Festigkeit aufweisen.

In einer möglichen Ausführungsform weist wenigstens die Deckschicht zumindest eine Ausnehmung (Loch) auf. In diese Ausnehmung können wahlweise Werkstoffe hoher Dichte und/oder Festigkeit und/oder Belastbarkeit z.B. eingelegt, eingesteckt, geklemmt, eingeklebt, etc. werden, um eine besonders hohe Punktbelastbarkeit zu erzielen. Die wenigstens eine Ausnehmung kann bis in die Dämmstoffplatte reichen.

Weitere Einzelheiten und Merkmale der Erfindung ergeben sich aus der nachstehenden Beschreibung von Ausführungsbeispielen anhand der Zeichnungen. Es zeigt:
Fig. 1 eine erste Ausführungsform einer Geschossdeckendämmplatte,
Fig. 2 eine zweite Ausführungsform einer Geschossdeckendämmplatte,
Fig. 3 eine dritte Ausführungsform einer Geschossdeckendämmplatte,
Fig. 4 eine vierte Ausführungsform einer Geschossdeckendämmplatte,
Fig. 5 bis 8 vier weitere Ausführungsformen einer Geschoßdeckendämmplatte,
Fig. 9 eine Dämmplatte mit Stützelementen,
Fig. 10 eine Dämmplatte mit unterschiedlich ausgebildeten Deckschichten,
Fig. 11 eine weitere Ausführungsform einer Dämmplatte und
Fig. 12 eine Dämmplatte mit Entlastungsschlitzen.

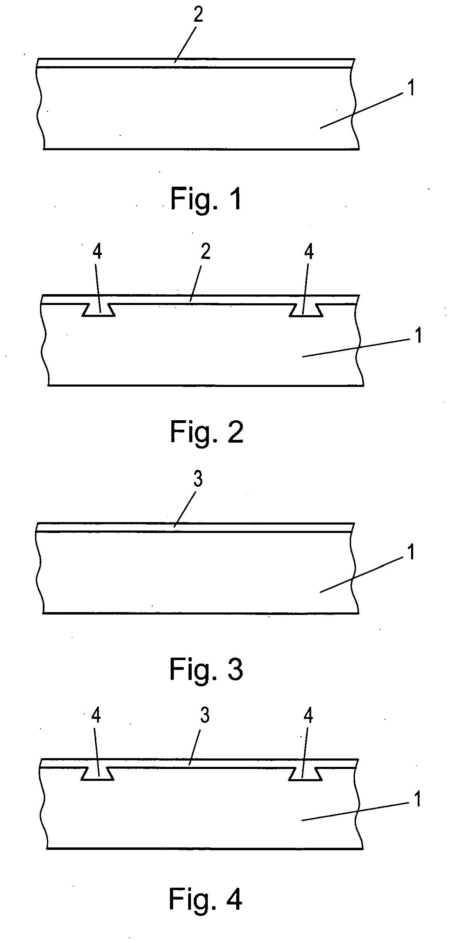

Bei der in Fig. 1 gezeigten Ausführungsform besteht eine Geschossdeckendämmplatte aus einer dämmenden Dämmstoffplatte 1 (Materialkomponente) und einer Deckschicht 2, die miteinander durch eine kraftschlüssige Verbindung unmittelbar verbunden sind.

Bei der in Fig. 2 gezeigten Ausführungsform einer erfindungsgemäßen Geschossdeckendämmplatte ist die dämmende Dämmstoffplatte 1 mit der Deckschicht 2 durch eine formschlüssige Verbindung verbunden, indem hinterschnitten ausgebildete ("schwalbenschwanzförmige") Ausformungen 4 (Leisten oder knopfartige Vorsprünge) der Deckschicht 2 in entsprechend hinterschnittene Ausnehmungen in der Dämmstoffplatte 1 eingreifen. Zusätzlich kann eine kraftschlüssige Verbindung vorgesehen sein.

Bei der in Fig. 3 gezeigten Ausführungsform einer Geschossdeckendämmplatte weist diese eine dämmende Dämmstoffplatte 1 und als Deckschicht wenigstens einen vorgefertigten Einlegeteil 3 auf, der über eine kraftschlüssige Verbindung mit der Dämmstoffplatte 1 unmittelbar verbunden ist.

Bei der in Fig. 4 gezeigten Ausführungsform einer Geschossdeckendämmplatte ist der wenigstens eine vorgefertigte Einlegeteil 3 über hinterschnitten ausgebildete (schwalbenschwanzförmige) Ausformungen 4, so wie anhand von Fig. 2 erläutert, mit der Dämmstoffplatte 1 formschlüssig verbunden. Auch hier kann zusätzlich eine kraftschlüssige Verbindung vorgesehen sein.

Die Ausformungen 4 der Fig. 2 und 4 können knopf- oder kappenartige Vorsprünge (rund oder eckig), Leisten oder Rippen sein.

### Nachstehend werden Ausführungsbeispiele für erfindungsgemäße Verfahren zum Herstellen von Dämmplatten, insbesondere Geschossdeckendämmplatten, gemäß der Erfindung erläutert:

Die nachstehenden Ausführungsbeispiele beschreiben schematisch mögliche Verfahren zum Herstellen der erfindungsgemäßen Dämmplatte, insbesondere Geschossdeckendämmplatte, aus z.B. expandiertem Polystyrol unterschiedlicher Dichte und/oder Materialfestigkeit. Zur Vereinfachung beschreiben die Beispiele das Herstellen von Geschossdeckendämmplatten mit einer dem unbewohnten Dachraum zugewandten, also von der Decke abgekehrten, Deckschicht.

Es können auch großflächige und/oder großformatige mehrkomponentige, integrale Geschossdeckendämmplatten hergestellt werden. Es besteht die Möglichkeit die Dämmplatten zu zerteilen, indem diese beispielsweise durch erhitzte Schneiddrähte und/oder mechanische Bearbeitung auf das erforderliche Endmaß konfektioniert werden.

### Beispiel eines einstufigen Formteilproduktionsprozesses:

Expandierbares und oder expandiertes Polystyrol mit unterschiedlichen Dichten, wird vorzugsweise in Schichten (Dämmstoffplatte, Deckschichte/n höherer Dichte und Festigkeit) in einen Formhohlraum gefüllt bzw. -fördert. Es kann von Vorteil sein, die Materialkomponenten unterschiedlicher Eigenschaften zeitlich versetzt in den formgebenden Hohlraum einzubringen. Um die Schichten (Dämmstoffplatte 1 und Deckschicht 2) der Dämmplatte präziser bilden zu können, kann es hilfreich sein, mittels beweglicher Teile (z.B. Trennwand, Trennblech, etc., welches vor und/oder im Zuge der Bedampfung beim Expandieren zwischen den Schichten entfernt wird) eine zu intensive Vermischung der unterschiedlichen Materialkomponenten weitestgehend zu unterbinden. Das expandierte und oder expandierbare Polystyrol wird mittels Einsatz von Heißdampf expandiert und dabei verschweißt, d.h. verbunden. Der Schäumdruck des sich in dem Formhohlraum befindlichen Schaumstoffes wird im Regelfall reduziert (z.B. Kühlen durch (Kühl)Wasser und/oder Vakuum). Bei Erreichen der erforderlichen Formstabilität wird die mehrlagige, endkonfektionierte, integrale Geschossdeckendämmplatte als Ganzes entformt.

Das beschriebene Produktionsverfahren kann wenigstens einen zusätzlichen, beispielsweise mit dem zuvor beschriebenen Verfahren vergleichbaren Produktionsschritt zur Bildung wenigstens einer Trittschallschutzschicht beinhalten. Es kann erforderlich sein, dass die z.B. Trittschallschutzschicht in zumindest einem Verfahrensschritt elastifiziert, gepresst wird. Vorzugsweise ist die wenigstens eine Trittschallschutzschicht mit der Dämmstoffplatte und/oder wenigstens einen Deckschicht unmittelbar verbunden.

### Mehrstufige Formteilproduktionsprozesse:

Als mehrstufige Formteilproduktionsprozesse können u.a. die nachfolgend beschriebenen Beispiele angeführt werden.

### Mehrstufiger Formteilproduktionsprozess (Dual Density, auch u.a. als Double Density bezeichnet):

Im ersten Produktionsschritt wird die Dämmstoffplatte 1 hergestellt. Expandierbares und oder expandiertes Polystyrol wird in einen Formhohlraum gefüllt bzw. -fördert und in diesem mittels Einsatz von Heißdampf expandiert, verschweißt sowie gegebenenfalls durch Kühlen mittels Kühlwasser und/oder Vakuum stabilisiert und formstabil gemacht. Im weiteren Produktionsablauf wird eine Wand des Formhohlraumes (Werkzeugkavität), z.B. mittels Spindelantrieb, verstellt, um einen Hohlraum für die Deckschicht höherer Dichte und Festigkeit zu bilden. Expandierbares und/oder expandiertes Polystyrol höherer Dichte und Festigkeit wird in den durch Verstellen der Werkzeugwand gebildeten, zusätzlichen Formhohlraum gefüllt bzw. gefördert und in diesem mittels Einsatz von Heißdampf durch Expandieren die Deckschicht 2 gebildet und im Verlauf mit der Dämmstoffplatte 1 verschweißt. Bei Erreichen der erforderlichen Formstabilität durch Kühlen z.B. mittels Kühlwasser und/oder Vakuum wird die nunmehr mehrlagige, endkonfektionierte, integrale Geschossdeckendämmplatte (Dämmstoffplatte und Deckschicht) als Ganzes entformt.

Dieses Verfahren kann auch derart ausgeführt werden, dass im ersten Produktionsschritt die Deckschicht 2 höherer Dichte und Festigkeit gebildet wird und im weiteren Produktionsverlauf die Dämmstoffplatte 1 gebildet und mit der Deckschicht 2 verschweißt wird. Bei Erreichen der erforderlichen Formstabilität durch Kühlen, z.B. mittels Kühlwasser und/oder Vakuum, wird die nunmehr mehrlagige, endkonfektionierte, integrale Geschossdeckendämmplatte (Deckschicht 2 und Dämmstoffplatte 1) als Ganzes entformt. Das beschriebene Produktionsverfahren kann wenigstens einen zusätzlichen, beispielsweise mit dem zuvor beschriebenen Verfahren vergleichbaren, Produktionsschritt zur Bildung wenigstens einer Trittschallschutzschicht beinhalten. Es kann erforderlich sein, dass die z.B. Trittschallschutzschicht in zumindest einem Verfahrensschritt elastifiziert, gepresst wird. Vorzugsweise ist die wenigstens eine Trittschallschutzschicht mit der Dämmstoffplatte und/oder wenigstens einen Deckschicht unmittelbar verbunden.

### Doppel-Rotax-Verfahren:

Im ersten Produktionsschritt wird die Dämmstoffplatte 1 hergestellt. Expandierbares und/oder expandiertes Polystyrol wird in einen Formhohlraum gefüllt bzw. -fördert und in diesem mittels Einsatz von Heißdampf expandiert, verschweißt sowie gegebenenfalls durch Kühlen mittels Kühlwasser und/oder Vakuum stabilisiert bzw. beliebig formstabil gemacht. Im weiteren Produktionsablauf wird ein Hohlraum für das Herstellen der Deckschicht 2 höherer Dichte und Festigkeit gebildet. Dies geschieht mit Hilfe beweglicher Teile, insbesondere Werkzeughälfte und/oder Dampfkammer, die horizontal gedreht bzw. rotiert werden kann/können. Mit der Bewegung wird die sich in der Werkzeughälfte befindliche Dämmstoffplatte 1 mitgedreht. Die Werkzeughälfte und/oder Dampfkammer wird mit einer weiteren Werkzeughälfte zusammengeführt, welche den Hohlraum für die Deckschicht 2 aufweist. Expandierbares und/oder expandiertes Polystyrol höherer Dichte und Festigkeit wird in den gebildeten Formhohlraum gefüllt bzw. gefördert und in diesem mittels Einsatz von Heißdampf die Deckschicht 2 gebildet und im Verlauf mit der Dämmstoffplatte 1 verschweißt. Bei Erreichen der erforderlichen Formstabilität durch Kühlen, z.B. mittels Kühlwasser und/oder Vakuum, wird die nunmehr mehrlagige, endkonfektionierte, integrale Geschossdeckendämmplatte (Dämmstoffplatte 1 und Deckschicht 2) als Ganzes entformt.

Dieses Verfahren kann auch derart ausgeführt werden, dass im ersten Produktionsschritt die Deckschicht 2 höherer Dichte und Festigkeit gebildet wird und im weiteren Produktionsverlauf die Dämmstoffplatte 1 gebildet und mit der Deckschicht 2 verschweißt wird. Bei Erreichen der erforderlichen Formstabilität durch Kühlen mittels Kühlwasser und/oder Vakuum wird die nunmehr mehrlagige, endkonfektionierte, integrale Geschossdeckendämmplatte (Deckschicht 2 und Dämmstoffplatte 1) als Ganzes entformt.

Das beschriebene Produktionsverfahren kann wenigstens einen zusätzlichen, beispielsweise mit dem zuvor beschriebenen Verfahren vergleichbaren, Produktionsschritt zur Bildung wenigstens einer Trittschallschutzschicht beinhalten. Es kann erforderlich sein, dass die z.B. Trittschallschutzschicht in zumindest einem Verfahrensschritt elastifiziert, gepresst wird. Vorzugsweise ist die wenigstens eine Trittschallschutzschicht mit der Dämmstoffplatte und/oder wenigstens einen Deckschicht unmittelbar verbunden.

### Transferverfahren:

Im ersten Produktionsschritt wird die Dämmstoffplatte 1 hergestellt. Expandierbares und oder expandiertes Polystyrol wird in einen Formhohlraum gefüllt bzw. -fördert und in diesem mittels Einsatz von Heißdampf expandiert, verschweißt sowie gegebenenfalls durch Kühlen mittels Kühlwasser und/oder Vakuum stabilisiert bzw. beliebig formstabil gemacht. Im weiteren Produktionsablauf wird ein Hohlraum für das Herstellen der Deckschicht 2 höherer Dichte und Festigkeit gebildet. Dies kann beispielsweise dadurch erfolgen, dass mit Hilfe beweglicher Teile Bereiche des Formhohlraumes (z.B. Werkzeughälfte) mit der darin befindlichen Dämmstoffplatte transferiert (verschoben) werden. Die Werkzeughälfte wird mit einer weiteren Werkzeughälfte zusammengeführt und bildet einen neuen Formhohlraum, welcher von der Dämmstoffplatte 1 nicht gänzlich ausgefüllt ist. Expandierbares und/oder expandiertes Polystyrol höherer Dichte und Festigkeit wird in den gebildeten Formhohlraum gefüllt bzw. gefördert und in diesem mittels Einsatz von Heißdampf durch Expandieren des Polystyrol die Deckschicht 2 gebildet und im Verlauf mit der Dämmplatte verschweißt. Bei Erreichen der erforderlichen Formstabilität durch Kühlen mittels Kühlwasser und/oder Vakuum wird die nunmehr mehrlagige, endkonfektionierte, integrale Geschossdeckendämmplatte (Dämmstoffplatte 1 und Deckschicht 2) als Ganzes entformt.

Das Herstellen der Formstabilität kann aber auch derart erfolgen, indem die nunmehr mehrlagige, integrale Geschossdeckendämmplatte in einen weiteren Formhohlraum transferiert wird, in welchem z.B. mittels Kühlwasser und/oder Vakuum die erforderliche Formstabilität hergestellt und dann als Ganzes entformt wird.

Ferner kann alternativ ausschließlich die Dämmstoffplatte in zumindest einen weiteren formgebenden Hohlraum übergeben werden. Das Transferieren von zumindest Teilen eines formgebenden Hohlraumes (z.B. Werkzeughälfte), um einen weiteren formgebenden Hohlraum zu bilden, findet nicht statt.

Dieses Verfahren kann auch derart ausgeführt werden, dass im ersten Produktionsschritt die Deckschicht 2 höherer Dichte und Festigkeit gebildet wird und im weiteren Produktionsverlauf die Dämmstoffplatte 1 gebildet und mit der Deckschicht 2 verschweißt wird. Bei Erreichen der erforderlichen Formstabilität durch Kühlen, z.B. mittels Kühlwasser und/oder Vakuum, wird die nunmehr mehrlagige, endkonfektionierte, integrale Geschossdeckendämmplatte (Deckschicht 2 und Dämmstoffplatte 1) als Ganzes entformt oder in einen weiteren Formhohlraum transferiert, in welchem die erforderliche Formstabilität durch Kühlen, z.B. mittels Kühlwasser und/oder Vakuum, herbeigeführt und die nunmehr mehrlagige, endkonfektionierte, integrale Geschossdeckendämmplatte (Deckschicht und Dämmstoffplatte) im Ganzen entformt wird.

Das beschriebene Produktionsverfahren kann wenigstens einen zusätzlichen, beispielsweise mit dem zuvor beschriebenen Verfahren vergleichbaren, Produktionsschritt zur Bildung wenigstens einer Trittschallschutzschicht beinhalten. Es kann erforderlich sein, dass die z.B. Trittschallschutzschicht in zumindest einem Verfahrensschritt elastifiziert, gepresst wird. Vorzugsweise ist die wenigstens eine Trittschallschutzschicht mit der Dämmstoffplatte und/oder wenigstens einen Deckschicht unmittelbar verbunden.

### Einstufiger Blockproduktionsprozess:

Ein einstufiger Blockproduktionsprozess kann mittels Blockformen bzw. Block(form)anlagen durchgeführt werden. Die Prozessstufen eines einstufigen Blockproduktionsprozesses können sich in Anlehnung an einen einstufigen Formteilproduktionsprozess gestalten (z.B. Einbringen von EPS z.B. in Schichten - Verschweißen - Herstellen von Formstabilität - Entformen).

Insbesondere können großflächige und oder großformatige Geschossdeckendämmplatten, hergestellt werden. Es besteht die Möglichkeit die derart hergestellte mehrlagige, integrale Geschossdeckendämmplatte zu zerteilen, indem diese beispielsweise durch erhitzte Schneiddrähte und/oder mechanische Bearbeitung auf das erforderliche Endmaß konfektioniert wird.

Das beschriebene Produktionsverfahren kann wenigstens einen zusätzlichen, beispielsweise mit dem zuvor beschriebenen Verfahren vergleichbaren, Produktionsschritt zur Bildung wenigstens einer Trittschallschutzschicht beinhalten. Es kann erforderlich sein, dass die z.B. Trittschallschutzschicht in zumindest einem Verfahrensschritt elastifiziert, gepresst wird. Vorzugsweise ist die wenigstens eine Trittschallschutzschicht mit der Dämmstoffplatte und/oder wenigstens einen Deckschicht unmittelbar verbunden.

### Mehrstufiger Blockproduktionsprozess:

Ein mehrstufiger Blockproduktionsprozess kann mittels Blockformen bzw. Block(form)anlagen durchgeführt werden. Die Prozessstufen eines mehrstufigen Blockproduktionsprozesses können sich in Anlehnung an einen mehrstufigen Formteilproduktionsprozess gestalten (z.B. Einbringen von EPS - Verschweißen - Herstellen beliebiger Formstabilität - Herstellen von Hohlraum - Einbringen von EPS höherer Dichte und Festigkeit - Verschweißen - Herstellen von Formstabilität - Entformen). Insbesondere können großflächige und oder großformatige Geschossdeckendämmplatten, hergestellt werden. Es besteht die Möglichkeit die derart hergestellte mehrlagige, integrale Geschossdeckendämmplatte zu zerteilen, indem diese beispielsweise durch erhitzte Schneiddrähte und/oder mechanische Bearbeitung auf das erforderliche Endmaß konfektioniert wird.

Das beschriebene Produktionsverfahren kann wenigstens einen zusätzlichen, beispielsweise mit dem zuvor beschriebenen Verfahren vergleichbaren, Produktionsschritt zur Bildung wenigstens einer Trittschallschutzschicht beinhalten. Es kann erforderlich sein, dass die z.B. Trittschallschutzschicht in zumindest einem Verfahrensschritt elastifiziert, gepresst wird. Vorzugsweise ist die wenigstens eine Trittschallschutzschicht mit der Dämmstoffplatte und/oder wenigstens einen Deckschicht unmittelbar verbunden.

Die Deckschicht höherer Dichte und Festigkeit der erfindungsgemäßen Dämmplatte, insbesondere Geschoßdeckendämmplatte, kann aus wenigstens einem vorgefertigten Einlegeteil 3 bestehen. In einer ersten Prozessstufe wird der vorgefertigte Einlegeteil 3 in einem Formhohlraum, beispielsweise mittels Roboter, positioniert und - falls erforderlich - fixiert, wobei er jedoch nicht den gesamten Formhohlraum ausfüllt. In einer weiteren Prozessstufe wird expandiertes und/oder expandierbares Polystyrol in den verbleibenden Formhohlraum gefüllt bzw. gefördert und in diesem mittels Einsatz von Heißdampf durch Expansion die Dämmstoffplatte 1 gebildet und dabei mit dem Einlegeteil 3 form- und/oder kraftschlüssig verbunden. Nachdem die erforderliche Formstabilität zumindest des aus EPS bestehenden Teiles der Geschoßdeckendämmplatte durch Kühlen, z.B. mittels Kühlwasser und/oder Vakuum, erreicht wird, kann die nunmehr mehrlagige, endkonfektionierte, integrale Geschossdeckendämmplatte (Dämmstoffplatte 1 und Deckschicht 2 in Form eines Einlegeteils 3) im Ganzen entformt werden.

Dieses Verfahren kann auch derart ausgeführt werden, dass im ersten Produktionsschritt die Dämmstoffplatte geringerer Dichte und Festigkeit gebildet wird und im weiteren Produktionsverlauf die vorgefertigte Deckschicht 2 (Einlegeteil 3) im Formhohlraum positioniert und mit der Dämmstoffplatte 1 form- und/oder kraftschlüssig verbunden wird.

Alternativ oder zusätzlich kann die Dämmstoffplatte zumindest ein vorgefertigter Einlegeteil sein.

Das beschriebene Produktionsverfahren kann wenigstens einen zusätzlichen, beispielsweise mit dem zuvor beschriebenen Verfahren vergleichbaren, Produktionsschritt zur Bildung wenigstens einer Trittschallschutzschicht beinhalten. Es kann erforderlich sein, dass die z.B. Trittschallschutzschicht in zumindest einem Verfahrensschritt elastifiziert, gepresst wird. Vorzugsweise ist die wenigstens eine Trittschallschutzschicht mit der Dämmstoffplatte und/oder wenigstens einen Deckschicht unmittelbar verbunden.

Es kann hilfreich sein, mehrere Formhohlräume (z.B. Doppel-Rotax-Verfahren, Transferverfahren, etc.) zu verwenden. Des Weiteren besteht die Möglichkeit unterschiedliche Verfahren beliebig zu kombinieren.

### Mehrkomponentenproduktionsverfahren:

In einem ersten Produktionsschritt wird die Dämmstoffplatte 1 hergestellt. Expandierbares und oder expandiertes Polystyrol wird in einen Formhohlraum gefüllt bzw. -fördert und in diesem mittels Einsatz von Heißdampf expandiert, verschweißt sowie gegebenenfalls durch Kühlung mittels Kühlwasser und/oder Vakuum stabilisiert bzw. beliebig formstabil gemacht. Im weiteren Produktionsablauf wird eine Wand des Formhohlraumes (z.B. Werkzeugkavität), z.B. mittels Spindelantrieb, verstellt, um einen Hohlraum für die Deckschicht 2 höherer Dichte und Festigkeit zu bilden. Expandierbares und oder expandiertes Polystyrol höherer Dichte und Festigkeit wird in den durch Verstellen der Werkzeugwand gebildeten Formhohlraum gefüllt bzw. gefördert und in diesem mittels Einsatz von Heißdampf durch Expandieren die Deckschicht gebildet und gleichzeitig mit der Dämmplatte verschweißt. Falls erforderlich kann die Geschossdeckendämmplatte, z.B. via Kühlwasser und oder Vakuum, formstabil gemacht und aus dem Formhohlraum zumindest teilweise ausgetragen werden. Die Formstabilität kann ebenfalls in zumindest einem weiteren formgebenden Hohlraum hergestellt werden.

Der zuvor dargestellte Prozessablauf wiederholt sich. Das weitere Stück der Geschoßdeckendämmplatte wird mit dem vorhergehenden vorzugsweise an einer Stirnseite verschweißt, d.h. verbunden. Insbesondere können großflächige und oder großformatige Geschossdeckendämmplatten, hergestellt werden. Es besteht die Möglichkeit die derart hergestellte mehrlagige, integrale Geschossdeckendämmplatte zu zerteilen, indem diese beispielsweise durch erhitzte Schneiddrähte und/oder mechanische Bearbeitung auf das erforderliche Endmaß konfektioniert wird.

Dieses Verfahren kann auch wie vorstehend beschrieben derart ausgeführt werden, dass im ersten Produktionsschritt die Deckschicht 2 höherer Dichte und Festigkeit gebildet wird und im weiteren Produktionsverlauf die Dämmstoffplatte 1 gebildet und mit der Deckschicht 2 verschweißt wird.

Das beschriebene Produktionsverfahren kann wenigstens einen zusätzlichen, beispielsweise mit dem zuvor beschriebenen Verfahren vergleichbaren, Produktionsschritt zur Bildung wenigstens einer Trittschallschutzschicht beinhalten. Es kann erforderlich sein, dass die z.B. Trittschallschutzschicht in zumindest einem Verfahrensschritt elastifiziert, gepresst wird. Vorzugsweise ist die wenigstens eine Trittschallschutzschicht mit der Dämmstoffplatte und/oder wenigstens einen Deckschicht unmittelbar verbunden.

Im Rahmen der Erfindung ist auch in Betracht gezogen, die Deckschicht 2 und/oder Einlegeteile 3 mit der Dämmstoffplatte 1 nicht vollflächig zu verbinden. Insbesondere ist hierbei in Betracht gezogen, die Dämmstoffplatte 1 im Bereich ihres Umfanges (ihrer Ränder) mit der Deckschicht 2/Einlegeteil 3 zumindest partiell nicht zu verbinden. Eine Verbindung kann aber auch nachträglich zumindest partiell gelöst werden.

Besteht die erfindungsgemäße Geschossdeckendämmplatte aus expandiertem Polystyrol unterschiedlicher Dichte, weist jenes der Dämmstoffplatte 1 vorzugsweise eine Dichte, Schaumstoffrohdichte bzw. Raumgewicht von 5 - 50 kg/m³ bzw. g/l, bevorzugt etwa 5 - 35 kg/m³ bzw. g/l auf. Das expandierte Polystyrol der wenigstens einen Deckschicht 2 kann im Wesentlichen eine Dichte, Schaumstoffrohdichte bzw. Raumgewicht von 6 - 600 kg/m³ bzw. g/l, bevorzugt etwa 10 - 400 kg/m³ bzw. g/l, insbesondere 15 - 250 kg/m³ bzw. g/l, besonders bevorzugt 20 - 170 kg/m³ bzw. g/l aufweisen.

Die wenigstens eine Deckschicht 2 der erfindungsgemäßen Geschossdeckendämmplatte ist mit der Dämmstoffplatte 1 ohne Hilfsmittel, wie z.B. Klebstoff, unmittelbar verbunden.

Besteht die erfindungsgemäße Geschossdeckendämmplatte, wie oben beschrieben, beispielsweise aus expandiertem Polystyrol in zumindest zwei unterschiedlichen Dichten, kann die Geradheit der Geschossdeckendämmplatte durch sog. Aufwölben, Schüsseln beeinträchtigt werden bzw. verloren gehen. Die Begründung liegt in dem Umstand, dass expandiertes Polystyrol u.a. in Abhängigkeit von Schaumstoffrohdichte, Art/Marke/Type des verwendeten Rohstoffes, etc. unterschiedliche Verhalten und/oder Eigenschaften hinsichtlich Dimensionsänderungen wie z.B. Kontraktion, Schwindung, Nachschwindung, Schrumpfung, Maßänderungen durch Wärmeeinfluss, etc. unterliegt. Konventionelle, Geschoßdeckendämmplatten weisen in der Regel Abmessungen, (Länge x Breite) 1000x500, 1250x600, 1200x600 mm, etc. auf. Die erfindungsgemäße Geschossdeckendämmplatte kann z.B. eine vergleichbare Größe und eine vollflächige Deckschicht 2 aufweisen. Weist nun das expandierte Polystyrol höherer Dichte eine andere, bspw. stärkere, Nachschwindung, Schwindung, etc. im Vergleich zu jenem der Dämmstoffplatte 1 mit geringerer Schaumstoffrohdichte auf, können Materialspannungen auftreten. Infolge der einseitig stärkeren Veränderung z.B. Nachschwindung, Schrumpfung, Schwindung, etc. der Deckschicht 2 kann ein Aufwölben, Schüsseln der Geschossdeckendämmplatte z.B. in Richtung der Deckschicht 2 auftreten.

Ein Aufwölben der Geschossdeckendämmplatte kann auch in Richtung der Dämmstoffplatte, bedingt durch eine einseitig stärkere Veränderung, z.B. Schwindung, Nachschwindung, etc. der Dämmstoffplatte erfolgen.

Um dies zu vermeiden, kann die Deckschicht 2 und/oder der Einlegeteil 3 und/oder die Dämmstoffplatte 1 unterbrochen sein.

Beispielsweise wirken Schlitze, Einschnitte bzw. allgemeine Unterteilungen ausgleichend auf Materialveränderungen; begrenzen Veränderungen, insbesondere großflächige Veränderungen, Formveränderungen der Dämmplatte, insbesondere der Geschossdeckendämmplatte.

Um diesem Umstand (Schüsseln) entgegenzuwirken, kann es besonders vorteilhaft sein, wenn die zumindest eine belastbare (z.B. trittfeste) Deckschicht 2 wenigstens eine Unterbrechung aufweist. Diese Unterbrechung, z.B. wenigstens ein Schlitz oder Einschnitt, kann auch in die Dämmstoffplatte 1 und/oder in zumindest eine weitere Deckschicht 2 reichen.

Die wenigstens eine Unterbrechung, z.B. Schlitz, Einschnitt, Entlastungsschlitz, kann auch nur teilweise in die wenigstens eine Deckschicht reichen und diese nicht gänzlich durchgreifen. Der wenigstens eine Einschnitt durchsetzt die wenigstens eine Deckschicht nur teilweise. Es kann sich wenigstens eine Sollbruchstelle im Bereich der Deckschicht und/oder Dämmstoffplatte bilden. Alternativ oder zusätzlich kann die Dämmstoffplatte mit wenigstens einer Unterbrechung, z.B. Einschnitt, Schlitz, Entlastungsschlitz, versehen sein, welche die Dämmstoffplatte teilweise oder gänzlich durchsetzen kann und beliebig in wenigstens eine Deckschicht reichen kann.

Eine solche Maßnahme, insbesondere wenigstens ein Schlitz, bewirkt, dass die Dämmstoffplatte 1 beispielsweise wegen der im Verhältnis zur Deckschicht 2 zumindest partiell erheblich größeren Dicke - auch wenn es zu anderen Dimensionsänderungen der wenigstens einen Deckschicht kommt - insbesondere die erfindungsgemäße Dämmplatte (Geschossdeckendämmplatte) ihre Formstabilität bezüglich Geradheit behält.

Als Beispiele für Unterbrechungen können u.a. Schlitz/e, Fuge/n, Einschnitt/e, Entlastungsschlitz/e, Loch/Löcher, Perforierung/en angeführt werden.

Zusätzlich oder alternativ kann es vorteilhaft sein, wenn die wenigstens eine Deckschicht 2 beliebig (z.B. partiell) unterbrochen ist.

Alternativ kann die Geschossdeckendämmplatte im Bereich der Oberfläche zumindest zwei Deckschichten 2 aufweisen.

In einer weiteren Ausführungsform deckt die zumindest eine Deckschicht 2 die Dämmstoffplatte 1 nicht gänzlich ab. Der wenigstens eine beabstandete und/oder unterbrochene und/oder nicht abgedeckte Bereich kann mit einer Materialkomponente ausgefüllt sein oder keine Materialkomponenten (z.B. dämmende Materialkomponenten) enthalten.

Ferner kann die wenigstens eine Deckschicht 2 oder der wenigstens eine Einlegeteil 3 in die Dämmstoffplatte 1 versenkt sein.

Die wenigstens eine Deckschicht 2 kann mit der Dämmstoffplatte 1 partiell oder vollflächig verbunden sein. Im Falle einer partiellen Verbindung kann es besonders vorteilhaft sein, wenn der Randbereich von Dämmstoffplatte 1 und/oder Deckschicht 2 zumindest partiell keine form- und/oder kraftschlüssige Verbindung aufweist.

Diese soeben dargestellten Ausführungsbeispiele von Unterbrechungen, wie z.B. Entlastungsschlitze, in der Deckschicht 2 und/oder Dämmstoffplatte 1 und/oder beabstandete Deckschichten 2 der erfindungsgemäßen Dämmplatte (Geschossdeckendämmplatte) können unterschiedliche Schwindungen, Nachschwindungen, Schrumpfungen, u.dgl. von Dämmplatte und Deckschicht aufnehmen bzw. Spannungen kompensieren bzw. abbauen. Durch die geringere Spannung und/oder wegen der Stabilität der Dämmstoffplatte 1 kann die erfindungsgemäße Dämmplatte (Geschoßdeckendämmplatte) die Formstabilität bzgl. Geradheit (ebene Form) trotz unterschiedlicher (z.B. thermischer oder durch Schwinden bzw. Nachschwinden bedingter) Dimensionsänderungen von Deckschicht 2 und Dämmstoffplatte 1 beibehalten.

Die Tendenz von erfindungsgemäßen Dämmplatten (Geschossdeckendämmplatten) zum Aufwölben, Schüsseln, kann somit unterbunden werden.

Die soeben angeführten Merkmale der erfindungsgemäßen Dämmplatte (Geschossdeckendämmplatte) sind insbesondere bei ansteigender Dichte des expandierten Polystyrols der Deckschicht 2, um z.B. die Trittfestigkeit bzw. Belastbarkeit weiter zu erhöhen, bzw. zunehmendem Unterschied der Dichten des expandierten Polystyrols der Dämmstoffplatte und der wenigstens einen Deckschicht von erheblichem Vorteil.

Die erfindungsgemäß als Unterbrechungen beispielsweise vorgesehenen Entlastungsschlitze werden erfindungsgemäß derart gebildet, dass beispielsweise im Bereich des formgebenden Hohlraumes (z.B. Werkzeugwand) der Deckschicht zumindest ein Blech, Steg, u.dgl. vorhanden ist. Dieser kann mit dem formgebenden Hohlraum fest verbunden sein. Alternativ kann der Steg als getrennt beweglicher Teil ausgeführt sein, welcher in den formgebenden Hohlraum der Deckschicht reicht. Wahlweise können diese Stege im formgebenden Hohlraum auch bis in die Dämmstoffschicht 1 reichen.

In einer besonders vorteilhaften Ausführung weist die wenigstens eine Deckschicht eine andere Klasse zum Brandverhalten, beispielsweise gemäß ÖNORM EN 13501-1, als die Dämmstoffplatte auf. Die Klasse zum Brandverhalten wird in bekannter Weise durch standardisierte Prüfverfahren ermittelt. Vorzugsweise weist die Deckschicht gemäß ÖNORM EN 13501-1 eine Klasse zum Brandverhalten im Bereich A1 bis D auf.

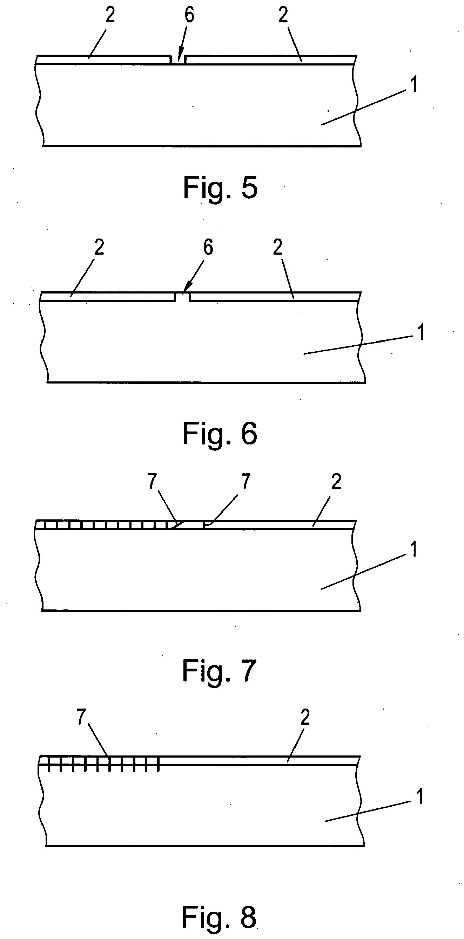

Bei der in Fig. 5 gezeigten Ausführungsform besteht eine Geschossdeckendämmplatte aus einer Dämmstoffplatte 1 als dämmenden Materialkomponente und zwei beabstandeten Deckschichten 2, die mit der Dämmstoffplatte 1 durch eine kraftschlüssige Verbindung verbunden sind. Der als Unterbrechung wirkende Bereich 6 zwischen den Deckschichten 2 weist keine Materialkomponente auf.

Bei der in Fig. 6 gezeigten Ausführungsform besteht eine Geschossdeckendämmplatte aus einer Dämmstoffplatte 1 und zwei Deckschichten 2, die mit der Dämmstoffplatte 1 durch eine kraftschlüssige Verbindung verbunden sind. Der als Unterbrechung der Deckschicht 2 wirkende Bereich 6 zwischen den Deckschichten 2 ist hier mit Werkstoff, insbesondere jenem der Dämmstoffplatte 1, ausgefüllt.

Bei der in Fig. 7 gezeigten Ausführungsform weist die Deckschicht 2 Schlitze 7, die als Entlastungsschlitze wirken, beliebiger Anordnung auf. Diese Schlitze 7 sind zur Ebene der Dämmplatte senkrecht oder unter einem schiefen Winkel ausgerichtet. Auch Kombinationen unterschiedlich ausgerichteter Schlitze 7 sind in Betracht gezogen.

Wie die Ausführungsform von Fig. 8 zeigt, können die Schlitze 7 auch bis in den Bereich der Dämmstoffplatte 1 reichen.

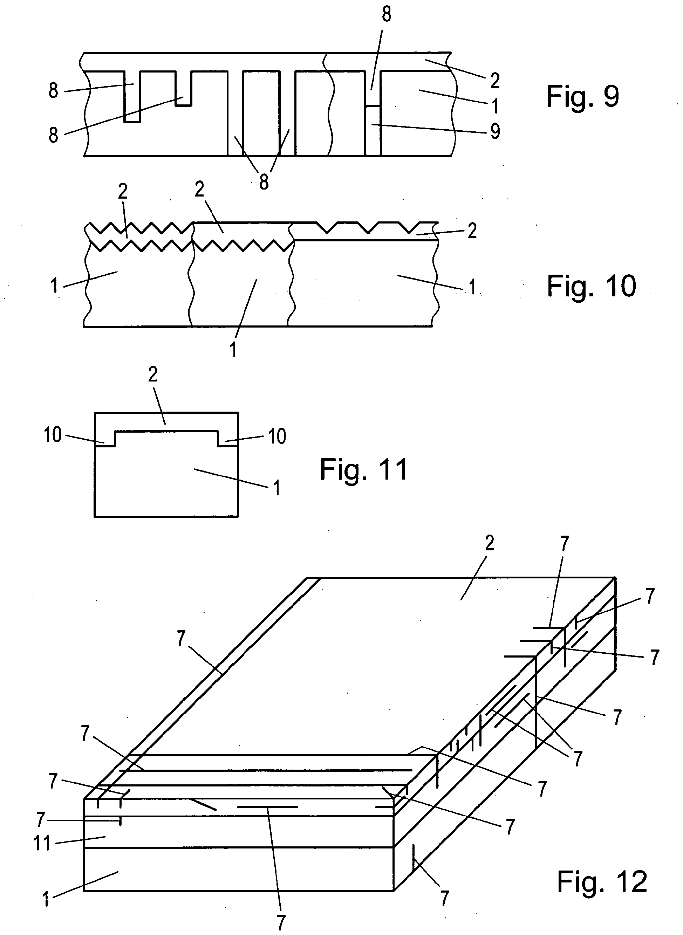

Bei der in Fig. 9 gezeigten Ausführungsform besteht eine Geschossdeckendämmplatte aus einer Dämmstoffplatte 1 und einer Deckschicht 2, die mit der Dämmstoffplatte 1 kraft- und/oder formschlüssig verbunden ist. Die Geschossdeckendämmplatte weist Stützelemente 8 auf, die Bestandteil der Deckschicht 2 sind. In einer Ausführungsform reichen Stützelemente 8 in die Dämmstoffplatte 1. In einer weiteren Ausführungsform durchgreifen die Stützelemente 8 die gesamte Dämmstoffplatte 1 durchgehend bis auf die der Deckschicht 2 gegenüberliegende Seite. In einer dritten in Fig. 9 gezeigten Ausführungsform sind Stützelemente 8 in ihrem Bereich 9 Bestandteil der Dämmstoffplatte 1 oder ein in dieser vorgesehener Teil, und im Übrigen Bestandteil der Deckschicht 2.

Bei der in Fig. 10 gezeigten Ausführungsform besteht eine Geschossdeckendämmplatte aus einer Dämmstoffplatte 1 und einer Deckschicht 2, die mit der Dämmstoffplatte 1 kraft- und/oder formschlüssig verbunden ist. Es sind drei Ausführungsformen der Deckschicht 2 dargestellt. In der ersten Ausführungsform, in Fig. 10 links, weist die Deckschicht 2 beidseitig eine wellenförmige (zick-zack) Struktur auf. In einer zweiten Ausführungsform, in Fig. 10 in der Mitte, weist die Deckschicht 2 nur im Bereich ihrer der Dämmstoffplatte 1 zugewandten Seite eine wellenförmige Struktur auf. In beiden Fällen weist die Dämmstoffplatte 1 im Bereich ihrer der Deckschicht 2 zugewandten Fläche eine entsprechend gegengleich geformte Struktur auf. In einer dritten Ausführungsform, in Fig. 10 rechts, weist die Deckschicht 2 unterschiedliche Dicken und eine im Wesentlichen trapezförmige Struktur bzw. Profilierung auf. Die Dämmstoffplatte 1 weist im Bereich ihrer der Deckschicht 2 zugewandten Fläche eine im Ausführungsbeispiel glatte Oberfläche 5 auf. Die einander zugewandten Flächen von Deckschicht 2 und Dämmstoffplatte 1 weisen bevorzugt die gleiche Profilierung bzw. Struktur auf.

Bei der in Fig. 11 gezeigten Ausführungsform besteht eine Geschossdeckendämmplatte aus einer Dämmstoffplatte 1 und einer Deckschicht 2, die mit der Dämmstoffplatte kraft- und/oder formschlüssig verbunden ist. Die Deckschicht 2 reicht mit Rändern 10 bis in den Seitenbereich der Geschossdeckendämmplatte und bedeckt die Seitenflächen der Dämmstoffplatte 1 wenigstens in ihrem der Deckschicht 2 benachbarten Bereich.

Fig. 12 zeigt eine Schrägansicht der erfindungsgemäßen Geschossdeckendämmplatte bestehend aus einer Dämmstoffplatte 1 und einer Deckschicht 2 mit unterschiedlichen Anordnungen bzw. Ausführungsvarianten von als Entlastung wirkenden Schlitzen 7.

Aus Fig. 12 ist ersichtlich, dass Schlitze 7 über die gesamte Länge und/oder Breite der erfindungsgemäßen Dämmplatte durchgehend ausgebildet sein können. Solche Schlitze 7 können auch nur über zumindest einen Teil der gesamten Länge und/oder Breite der erfindungsgemäßen Dämmplatte ausgebildet sein. Solche Schlitze 7 können auch nur im Randbereich der erfindungsgemäßen Dämmplatte vorgesehen sein.

Die Schlitze 7 können wie angedeutet über der Dämmplatte verteilt angeordnet sein.

Im Einzelnen zeigt Fig. 12, dass Schlitze 7 in Längsrichtung der Dämmplatte durchgehend ausgebildet sein können.

Ebenso zeigt Fig. 12, dass Schlitze 7 über die Breite der Dämmplatte durchgehend ausgebildet sein können.

Auch Kombinationen von einander kreuzenden Schlitzen 7 sind in Betracht gezogen.

Diese in Längsrichtung oder in Querrichtung verlaufenden Schlitze 7 können die Deckschicht 2 teilweise oder ganz durchgreifen und auch bis in die Dämmstoffplatte 1 reichend ausgebildet sein.

Ebenso in Betracht gezogen ist im Rahmen der Erfindung, dass Schlitze 7 lediglich im Randbereich der Dämmplatte vorgesehen sind. Diese Schlitze 7 können eine Tiefe haben, die kleiner ist als die Stärke der Deckschicht 2, oder sie haben eine Tiefe, die der Dicke (Stärke) der Deckschicht 2 entspricht oder die Schlitze 7 reichen bis in Dämmstoffplatte 1.

Abgesehen von Schlitzen 7, die parallel zu den Seitenrändern (Längsseite oder Breitseite) der Dämmplatte verlaufen, können, wie dies in Fig. 12 gezeigt ist, auch schräglaufende Schlitze 7 vorgesehen sein, die lediglich im Eckbereich oder Randbereich der Dämmplatte oder über die gesamte Fläche der Dämmplatte durchgehend ausgebildet sein können. Auch diese Schlitze 7 können unterschiedliche Tiefen haben und die Deckschicht 2 teilweise oder zur Gänze durchsetzen und auch bis in die Dämmstoffplatte 1 reichen.

Schließlich ist in Fig. 12 noch gezeigt, dass Einschnitte 7 auch lediglich in der der Deckschicht 2 abgewendeten Seite der Dämmstoffplatte 1 vorgesehen sein können, die in die Dämmstoffplatte 1 von der der Deckschicht 2 gegenüberliegenden Seite her die Dämmstoffplatte 1 teilweise oder ganz durchgreifen.

In Fig. 12 ist auch gezeigt, dass im Rahmen der Erfindung auch Schlitze 7 in Betracht gezogen sind, die von der Grenzfläche zwischen Deckschicht 2 und Dämmstoffplatte 1 ausgehend in die Deckschicht 2 reichen.

Solche Schlitze 7 können auch von der Grenzfläche zwischen Dämmstoffplatte 1 und Deckschicht 2 ausgehend sowohl in die Dämmstoffplatte 1 als auch in die Deckschicht 2 reichend ausgebildet sein.

Eine weitere Möglichkeit, Schlitze 7 als entlastende Unterbrechungen vorzusehen besteht darin, Schlitze 7 von der Grenzfläche zwischen Deckschicht 2 und Dämmstoffplatte 1 lediglich in die Dämmstoffplatte 1 reichend auszubilden.

Weiters können als Unterbrechungen Schlitze 7 auch parallel zur Ebene der Dämmplatte vom Rand derselben ausgehend vorgesehen sein (diese sind in Fig. 12 nur bereichsweise dargestellt).

Die als entlastende Unterbrechungen wirkenden Schlitze 7 oder dgl. können über die Länge/Breite der Dämmplatte durchgehend oder (wie in Fig. 12 rechts angedeutet) nur im Randbereich der Dämmplatte vorgesehen sein.

Fig. 12 zeigt auch, dass zwischen Dämmstoffplatte 1 und Deckschicht 2 wenigstens eine Schicht 11 aus dämmendem, insbesondere elastischem, Material vorgesehen sein kann.

### Zusammenfassend kann ein Ausführungsbeispiel der Erfindung wie folgt beschrieben werden:

Eine als Geschossdeckendämmplatte ausgebildete Dämmplatte weist eine Dämmstoffplatte 1 und wenigstens eine, gegebenenfalls als Einlegeteil 3 ausgebildete Deckschicht 2 auf. Die Dämmstoffplatte 1 ist mit der Deckschicht 2 unmittelbar, d.h. ohne Verklebung, verbunden. Die Deckschicht 2 kann als Entlastungsschlitze 7 ausgebildete Unterbrechungen, die bis in die Dämmstoffplatte 1 reichen können, aufweisen. Zur Steigerung der Belastbarkeit können mit der Deckschicht 2 einteilig ausgebildete Stützelemente 8, die in die Dämmstoffplatte 1 ragen oder diese durchgreifen, vorgesehen sein.

## Patentansprüche

1. Dämmplatte, insbesondere zum Verlegen auf einer Geschossdecke, vorzugsweise auf einer obersten Geschossdecke, umfassend eine Dämmstoffplatte (1) als dämmende Materialkomponente und wenigstens eine Deckschicht (2), wobei die Deckschicht (2) mit der Dämmstoffplatte (1) unmittelbar verbunden ist, **dadurch gekennzeichnet, dass** die Dämmstoffplatte (1) und die Deckschicht (2) aus expandiertem und z.B. mittels Heißdampf verschweißtem Polystyrol bestehen, wobei das expandierte Polystyrol der Dämmstoffplatte (1) im Vergleich zu jenem der Deckschicht (2) unterschiedlich, z.B. stärker bzw. intensiver oder geringer, verschweißt ist, dass zumindest die Dämmstoffplatte (1) wenigstens teilweise aus expandiertem Polystyrol mit einem Zusatz aus athermanen Stoffen besteht, dass die Dämmstoffplatte (1) aus expandiertem Polystyrol eine Dichte von 5 - 50 kg/m³ bzw. g/l aufweist, und dass die Außenränder der Dämmplatte an ihren Seitenflächen oder wenigstens an einzelnen Seitenflächen mit einer Nut-Feder-Verbindung als Mittel zum Verbinden von Dämmplatten ausgeführt sind.

2. Dämmplatte nach Anspruch 1, **dadurch gekennzeichnet, dass** die Deckschicht (2) im Vergleich zur Dämmstoffplatte (1) eine höhere Dichte und/oder Festigkeit und/oder Belastbarkeit aufweist.

3. Dämmplatte nach Anspruch 1 oder 2, **dadurch gekennzeichnet, dass** die Dämmstoffplatte (1) aus expandiertem Polystyrol eine Dichte von 5 - 35 kg/m³ bzw. g/l aufweist.

4. Dämmplatte nach einem der Ansprüche 1 bis 3, **dadurch gekennzeichnet, dass** die Deckschicht (2) aus expandiertem Polystyrol eine Dichte von 6 - 600 kg/m³ bzw. g/l, bevorzugt etwa 10 - 400 kg/m³ bzw. g/l, insbesondere 15 - 250 kg/m³ bzw. g/l, besonders bevorzugt 20 - 170 kg/m³ bzw. g/l aufweist.

5. Dämmplatte nach einem der Ansprüche 1 bis 4, **dadurch gekennzeichnet, dass** die Dämmstoffplatte (1) und die Deckschicht (2) wenigstens teilweise aus expandiertem Polystyrol mit einem Zusatz aus athermanen Stoffen bestehen.

6. Dämmplatte nach einem der Ansprüche 1 bis 5, **dadurch gekennzeichnet, dass** der Zusatz aus athermanen Stoffen Infrarotabsorber bzw. - reflektoren umfasst.

7. Dämmplatte nach einem der Ansprüche 1 bis 6, **dadurch gekennzeichnet, dass** das expandierte Polystyrol der Dämmstoffplatte (1) im Vergleich zu jenem der Deckschicht (2) einen unterschiedlichen, z.B. einen höheren oder geringeren, Wasserdampfdiffusionswiderstandsfaktor (µ) aufweist.

8. Dämmplatte nach einem der Ansprüche 1 bis 7, **dadurch gekennzeichnet, dass** die Nut-Feder-Verbindung rundumlaufend, klemmend oder formschlüssig ist.

9. Dämmplatte nach einem der Ansprüche 1 bis 8, **dadurch gekennzeichnet, dass** die wenigstens eine Deckschicht (2) an unterschiedlichen Stellen eine unterschiedlich hohe Belastbarkeit bzw. Festigkeit aufweist.

10. Verfahren zum Herstellen einer Dämmplatte nach einem der Ansprüche 1 bis 9, bei dem die Dämmstoffplatte (1) und/oder die wenigstens eine Deckschicht (2) im Produktionsverlauf in wenigstens einem Formhohlraum gebildet und miteinander verbunden werden, **dadurch gekennzeichnet, dass** als Werkstoff für die Dämmstoffplatte (1) und die Deckschicht (2) expandiertes Polystyrol verwendet wird, wobei das expandierte Polystyrol der Dämmstoffplatte (1) und das expandierte Polystyrol der Deckschicht (2) z.B. mittels Heißdampf verschweißt wird und wobei das expandierte Polystyrol der Dämmstoffplatte (1) im Vergleich zu jenem der Deckschicht (2) unterschiedlich, z.B. stärker bzw. intensiver oder geringer, verschweißt wird, dass als Werkstoff zumindest für die Dämmstoffplatte (1) wenigstens teilweise expandiertes Polystyrol mit einem Zusatz aus athermanen Stoffen verwendet wird, dass als Werkstoff für die Dämmstoffplatte (1) expandiertes Polystyrol mit einer Dichte von 5 - 50 kg/m³ bzw. g/l verwendet wird, und dass die Außenränder der Dämmplatte an ihren Seitenflächen oder wenigstens an einzelnen Seitenflächen mit einer Nut-Feder-Verbindung als Mittel zum Verbinden von Dämmplatten ausgeführt werden.

11. Verfahren nach Anspruch 10, **dadurch gekennzeichnet, dass** als Deckschicht (2) wenigstens ein vorgefertigter Einlegeteil (3) verwendet wird.

12. Verfahren nach Anspruch 10 oder 11, **dadurch gekennzeichnet, dass** die Deckschicht (2) bzw. der Einlegeteil (3) mit der Dämmstoffplatte (1) kraftschlüssig und/oder formschlüssig verbunden wird.

13. Verfahren nach einem der Ansprüche 10 bis 12, **dadurch gekennzeichnet, dass** als Deckschicht (2) und/oder Einlegeteil (3) ein Werkstoff mit einer höheren Materialdichte und/oder Materialfestigkeit als der Werkstoff der Dämmstoffplatte (1) verwendet wird.

14. Verfahren nach einem der Ansprüche 10 bis 13, **dadurch gekennzeichnet, dass** als Werkstoff für die Dämmstoffplatte (1) und die Deckschicht (2) wenigstens teilweise expandiertes Polystyrol mit einem Zusatz aus athermanen Stoffen verwendet wird.

## Claims

1. Insulation board, in particular for laying on a ceiling between storeys, preferably on a ceiling of an uppermost storey, comprising an insulating material panel (1) as an insulating material component and at least one cover layer (2), wherein the cover layer (2) is directly connected to the insulating material panel (1), **characterized in that** the insulating material panel (1) and the cover layer (2) are made of expanded polystyrene that has been fused for example by means of superheated steam, wherein the expanded polystyrene of the insulating material panel (1) is fused differently, for example to a greater extent and/or more intensively or to a lesser extent, in comparison to that of the cover layer (2), **in that** at least the insulating material panel (1) is made at least partially of expanded polystyrene containing an addition of athermanous substances, **in that** the insulating material panel (1) made of expanded polystyrene has a density of 5 - 50 kg/m³ or g/l, and **in that** the outer edges of the insulation board on the side faces thereof or at least on individual side faces are configured with a tongue-and-groove connection as a means for connecting insulation boards.

2. Insulation board according to claim 1, **characterized in that** the cover layer (2) has a higher density and/or strength and/or load-bearing capacity in comparison to the insulating material panel (1).

3. Insulation board according to claim 1 or 2, **characterized in that** the insulating material panel (1) made of expanded polystyrene has a density of 5 - 35 kg/m³ or g/l.

4. Insulation board according to any one of claims 1 to 3, **characterized in that** the cover layer (2) made of expanded polystyrene has a density of 6 - 600 kg/m³ or g/l, preferably approximately 10 - 400 kg/m³ or g/l, in particular 15 - 250 kg/m³ or g/l, particularly preferably 20 - 170 kg/m³ or g/l.

5. Insulation board according to any one of claims 1 to 4, **characterized in that** the insulating material panel (1) and the cover layer (2) are made at least partially of expanded polystyrene containing an addition of athermanous substances.

6. Insulation board according to any one of claims 1 to 5, **characterized in that** the addition of athermanous substances comprises infrared absorbers and/or reflectors.

7. Insulation board according to any one of claims 1 to 6, **characterized in that** the expanded polystyrene of the insulating material panel (1) has a different, for example a higher or lower, water vapour diffusion resistance factor (µ) in comparison to that of the cover layer (2).

8. Insulation board according to any one of claims 1 to 7, **characterized in that** the tongue-and-groove connection runs around the entire circumference and acts by clamping or with a form fit.

9. Insulation board according to any one of claims 1 to 8, **characterized in that** the at least one cover layer (2) has a different load-bearing capacity and/or strength at different points.

10. Method for producing an insulation board according to any one of claims 1 to 9, in which the insulating material panel (1) and/or the at least one cover layer (2) in the course of production are formed in at least one mould cavity and are connected to one another, **characterized in that** expanded polystyrene is used as the material for the insulating material panel (1) and the cover layer (2), wherein the expanded polystyrene of the insulating material panel (1) and the expanded polystyrene of the cover layer (2) is fused for example by means of superheated steam, and wherein the expanded polystyrene of the insulating material panel (1) is fused differently, for example to a greater extent and/or more intensively or to a lesser extent, in comparison to that of the cover layer (2), **in that** expanded polystyrene containing an addition of athermanous substances is used at least partially as the material at least for the insulating material panel (1), **in that** expanded polystyrene having a density of 5 - 50 kg/m³ or g/l is used as the material for the insulating material panel (1), and **in that** the outer edges of the insulation board are configured on the side faces thereof or at least on individual side faces with a tongue-and-groove connection as a means for connecting insulation boards.

11. Method according to claim 10, **characterized in that** at least one prefabricated insert (3) is used as the cover layer (2).

12. Method according to claim 10 or 11, **characterized in that** the cover layer (2) or the insert (3) is connected to the insulating material panel (1) with a force fit and/or with a form fit.

13. Method according to any one of claims 10 to 12, **characterized in that** a material having a higher material density and/or material strength than the material of the insulating material panel (1) is used as the cover layer (2) and/or insert (3).

14. Method according to any one of claims 10 to 13, **characterized in that** expanded polystyrene containing an addition of athermanous substances is used at least partially as the material for the insulating material panel (1) and the cover layer (2).

## Revendications

1. Panneau isolant, en particulier à poser sur un plafond d'étage, de préférence un plafond de dernier étage, comprenant un panneau de matériau isolant (1) qui forme la composante de matériau isolante et au moins une couche de couverture (2), laquelle couche de couverture (2) est reliée directement au panneau de matériau isolant (1), **caractérisé en ce que** le panneau de matériau isolant (1) et la couche de couverture (2) se composent de polystyrène expansé et soudé, par exemple, au moyen de vapeur chaude, le polystyrène expansé du panneau de matériau isolant (1) étant soudé différemment de celui de la couche de couverture (2), par exemple plus fortement ou plus intensivement ou moins fortement, **en ce que** le panneau de matériau isolant (1), au moins, se compose au moins en partie de polystyrène expansé additionné de matières athermanes, **en ce que** le panneau de matériau isolant (1) en polystyrène expansé présente une masse volumique de 5 à 50 kg/m³ ou g/l et **en ce que** les bords extérieurs du panneau isolant sont munis sur leurs surfaces latérales ou au moins sur certaines surfaces latérales d'un assemblage à rainure et languette formant un moyen d'assemblage de panneaux isolants.

2. Panneau isolant selon la revendication 1, **caractérisé en ce que** la couche de couverture (2) présente une masse volumique et/ou une solidité et/ou une résistance aux charges plus élevées que le panneau de matériau isolant (1).

3. Panneau isolant selon la revendication 1 ou 2, **caractérisé en ce que** le panneau de matériau isolant (1) en polystyrène expansé présente une masse volumique de 5 à 35 kg/m³ ou g/l.

4. Panneau isolant selon l'une des revendications 1 à 3, **caractérisé en ce que** la couche de couverture (2) en polystyrène expansé présente une masse volumique de 6 à 600 kg/m³ ou g/l, de préférence d'environ 10 à 400 kg/m³ ou g/l, en particulier de 15 à 250 kg/m³ ou g/l, tout particulièrement de 20 à 170 kg/m³ ou g/1.

5. Panneau isolant selon l'une des revendications 1 à 4, **caractérisé en ce que** le panneau de matériau isolant (1) et la couche de couverture (2) se composent au moins en partie de polystyrène expansé additionné de matières athermanes.

6. Panneau isolant selon l'une des revendications 1 à 5, **caractérisé en ce que** les matières athermanes ajoutées comprennent des absorbeurs ou réflecteurs d'infrarouges.

7. Panneau isolant selon l'une des revendications 1 à 6, **caractérisé en ce que** le polystyrène expansé du panneau de matériau isolant (1) présente, par rapport à celui de la couche de couverture (2), un facteur de résistance à la diffusion de vapeur d'eau (µ) différent, par exemple plus élevé ou plus bas.

8. Panneau isolant selon l'une des revendications 1 à 7, **caractérisé en ce que** l'assemblage à rainure et languette est circonférentiel, par serrage ou en engagement positif.

9. Panneau isolant selon l'une des revendications 1 à 8, **caractérisé en ce que** l'au moins une couche de couverture (2) présente une résistance aux charges ou une solidité différente à différents endroits.

10. Procédé pour la fabrication d'un panneau isolant selon l'une des revendications 1 à 9, dans lequel le panneau de matériau isolant (1) et/ou l'au moins une couche de couverture (2) sont formés au cours de la production dans au moins une cavité de moule et reliés entre eux, **caractérisé en ce que** le matériau utilisé pour le panneau de matériau isolant (1) et la couche de couverture (2) est du polystyrène expansé, le polystyrène expansé du panneau de matériau isolant (1) et le polystyrène expansé de la couche de couverture (2) étant soudés, par exemple, au moyen de vapeur chaude, et le polystyrène expansé du panneau de matériau isolant (1) étant soudé différemment de celui de la couche de couverture (2), par exemple plus fortement ou plus intensivement ou moins fortement, **en ce que** le matériau utilisé pour le panneau de matériau isolant (1) est au moins en partie du polystyrène expansé additionné de matières athermanes, **en ce que** le matériau utilisé pour le panneau de matériau isolant (1) est du polystyrène expansé ayant une masse volumique de 5 à 50 kg/m³ ou g/1 et **en ce que** les bords extérieurs du panneau isolant sont munis sur leurs surfaces latérales ou au moins sur certaines surfaces latérales d'un assemblage à rainure et languette formant un moyen d'assemblage de panneaux isolants.

11. Procédé selon la revendication 10, **caractérisé en ce qu'**au moins un insert (3) préfabriqué est utilisé comme couche de couverture (2).

12. Procédé selon la revendication 10 ou 11, **caractérisé en ce que** la couche de couverture (2) ou l'insert (3) est assemblé par friction et/ou par correspondance de forme avec le panneau de matériau isolant (1).

13. Procédé selon l'une des revendications 10 à 12, **caractérisé en ce que** le matériau utilisé pour la couche de couverture (2) et/ou l'insert (3) a une masse volumique de matériau et/ou une solidité de matériau plus élevée que le matériau du panneau de matériau isolant (1).

14. Procédé selon l'une des revendications 10 à 13, **caractérisé en ce que** le matériau utilisé pour le panneau de matériau isolant (1) et la couche de couverture (2) est au moins en partie du polystyrène expansé additionné de matières athermanes.
